(19) Europäisches Patentamt
European Patent Office
Office européen des brevets

(11) EP 3 978 232 B1

(12) **EUROPEAN PATENT SPECIFICATION**

(45) Date of publication and mention of the grant of the patent:
**05.06.2024 Bulletin 2024/23**

(21) Application number: **20813244.9**

(22) Date of filing: **28.05.2020**

(51) International Patent Classification (IPC):
***B32B 3/30*** (2006.01) ***C03C 17/30*** (2006.01)

(52) Cooperative Patent Classification (CPC):
(C-Sets available)
**C03C 17/28; C03C 17/3405; C08G 77/24; C09D 5/006; C09D 5/1662; C09D 5/1681; C09D 5/1693; C09D 7/20; C09D 7/61; C09D 7/68; C09D 7/70; C09D 171/02; C09D 183/08** (Cont.)

(86) International application number:
**PCT/JP2020/021112**

(87) International publication number:
**WO 2020/241751 (03.12.2020 Gazette 2020/49)**

(54) **TRANSPARENT SUBSTRATE WITH ANTIFOULING LAYER**

TRANSPARENTES SUBSTRAT MIT BEWUCHSHEMMENDER SCHICHT

SUBSTRAT TRANSPARENT POURVU D'UN FILM ANTISALISSURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2019 JP 2019102404**

(43) Date of publication of application:
**06.04.2022 Bulletin 2022/14**

(73) Proprietor: **AGC INC.**
**Chiyoda-ku,**
**Tokyo 1008405 (JP)**

(72) Inventors:
- **SHIOTA Hidefumi**
  **Tokyo 100-8405 (JP)**
- **TAKEDA Yosuke**
  **Tokyo 100-8405 (JP)**
- **SHIMOSAKA Takamichi**
  **Tokyo 100-8405 (JP)**

(74) Representative: **Müller-Boré & Partner Patentanwälte PartG mbB**
**Friedenheimer Brücke 21**
**80639 München (DE)**

(56) References cited:
**WO-A1-2011/060047**
**WO-A1-2014/119453**
**WO-A1-2014/119453**
**WO-A1-2016/181983**
**JP-A- 2016 141 699**
**JP-A- 2016 159 496**
**JP-A- 2016 159 496**
**JP-A- 2018 063 419**
**JP-A- 2018 198 050**
**JP-A- 2019 045 577**
**US-A1- 2015 118 502**
**US-A1- 2017 197 875**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 978 232 B1

(52) Cooperative Patent Classification (CPC): (Cont.)

C-Sets
**C09D 183/08, C08K 3/36**

## Description

TECHNICAL FIELD

The present invention relates to an antifouling layer-provided transparent substrate.

BACKGROUND ART

In recent years, display devices equipped with touch panel functions, such as mobile terminals represented by smartphones, display devices installed in vehicles, and display devices for personal computers, are widely used.

Among such display devices, the display devices installed in vehicles are incorporated in vehicle instrument panels (hereinafter referred to as "instrument panels"). The cover glass of a display device incorporated in an instrument panel is called the instrument panel cover glass. The instrument panel cover glass is generally designed to have antiglare properties to improve the visibility of the display device, and, for example, it has a fine concavo-convex structure on its surface. Further, the top surface layer is often composed of an antifouling layer in order to facilitate the removal of stains such as fingerprints.

As such an antifouling layer, a water-repellent film formed by using a hydrolyzable silane compound having a perfluoroalkylene group or a fluorinated polyether group, is known. For example, Patent Document 1 discloses a technique for obtaining a water-repellent film having excellent water repellency and abrasion resistance imparted by forming a water-repellent film by using a hydrolyzable silane compound having a perfluoroalkylene group with a specific structure and a hydrolyzable silane compound having a fluorinated polyether group with a specific structure in a predetermined ratio.

The documents JP 2016 159496 A, WO 2014/119453 A1, US 2017/197875 A1, WO 2011 /060047 and US 2015/118502 A1 describe substrates coated with an antifouling layer comprising a material comprising a divalent group represented by -(OCF2)v(OCF2CF2)w-.

PRIOR ART DOCUMENT

PATENT DOCUMENT

Patent Document 1: WO2018/034138

DISCLOSURE OF INVENTION

TECHNICAL PROBLEM

However, as mentioned above, in the case of instrument panel cover glass with a fine concavo-convex structure on the surface to obtain antiglare properties, the water-repellent film described in Patent Document 1 was not sufficient in antifouling properties, especially in removability of a creamy product such as hand cream once it was attached.

It is an object of the present invention to provide an antifouling layer-provided transparent substrate being excellent in antiglare and antifouling properties, especially in the removability of a creamy product such as hand cream.

SOLUTION TO PROBLEM

The present invention provides an antifouling layer-provided transparent substrate having the following construction.

[1] An antifouling layer-provided transparent substrate, comprising a transparent substrate and an antifouling layer provided as the top surface layer on one main surface of the transparent substrate, and an antiglare layer disposed between the transparent substrate and the antifouling layer, wherein the antifouling layer has a divalent group represented by $-(OCF_2)_v(OCF_2CF_2)_w-$ (where v and w are each independently an integer of at least 1), and the surface of the antifouling layer is such that the mean width RSm of the elements and the arithmetical mean roughness Ra satisfy the following formula (I):

$$RSm \geq Ra \times 100 + 5 \qquad (I)$$

[2] The antifouling layer-provided transparent substrate according to [1], wherein the surface of the antifouling layer has a skewness Rsk of from -1.3 to 1.3.

[3] The antifouling layer-provided transparent substrate according to [1] or [2], wherein the fluorine content surplus of the antifouling layer calculated by the following method is from 10 to 150:
(Method of calculating fluorine content surplus)
the fluorine content surplus is calculated by the following formula (II) from the fluorine atom intensity F1 in the antifouling layer of the antifouling layer-provided transparent substrate, measured by using an X-ray fluorescence analyzer (manufactured by Rigaku Corporation, ZSX100e) under the conditions of measurement diameter: 30 mm, measurement ray: F-Kα, filter: OUT, slit: standard, spectral crystal: RX35 (manufactured by Rigaku Corporation), detector: PC, PHA: 100-300, peak angle: 38.794 deg. (20 sec), and B.G. angle: 43.000 deg. (10 sec), and the fluorine atom intensity F2 in the antifouling layer of the antifouling layer-provided transparent substrate, after wiping the surface of the antifouling layer of the antifouling layer-provided transparent substrate, with a Kimwipe moistened with ASAHIKLIN (registered trademark) AE-3000 (manufactured by AGC Inc.):

$$\text{Fluorine content surplus} = (F1-F2)/F2\times 100 \qquad (II)$$

[4] The antifouling layer-provided transparent substrate according to any one of [1] to [3], wherein the ratio of said w to said v is from 0.1 to 10.
[5] The antifouling layer-provided transparent substrate according to any one of [1] to [4], wherein the arithmetical mean roughness Ra is from 0.01 to 0.15 μm.
[6] The antifouling layer-provided transparent substrate according to any one of [1] to [5], wherein the haze of the antifouling layer-provided transparent substrate is from 0.1 to 15.0%.
[7] The antifouling layer-provided transparent substrate according to any one of [1] to [6], wherein the 60° specular gloss measured on the surface of the antifouling layer is at most 140%.
[8] The antifouling layer-provided transparent substrate according to any one of [1] to [7], wherein the antiglare index value on the surface of the antifouling layer is at least 0.1.
[9] The antifouling layer-provided transparent substrate according to any one of [1] to [8], wherein the transparent substrate is a glass substrate.
[10] The antifouling layer-provided transparent substrate according to any one of [1] to [9], wherein the antifouling layer is a layer formed by using a compound having a divalent group represented by $-(OCF_2)_v(OCF_2CF_2)_w-$(where v and w are each independently an integer of at least 1) and a reactive silyl group.
[11] The antifouling layer-provided transparent substrate according to any one of [1] to [10], which is for vehicles.
[12] The antifouling layer-provided transparent substrate according to [11], which is for instrument panels.

ADVANTAGEOUS EFFECTS OF INVENTION

The antifouling layer-provided transparent substrate of the present invention is excellent in antiglare and antifouling properties, especially in removability of a creamy product such as hand cream.

BRIEF DESCRIPTION OF DRAWINGS

Fig. 1 is a cross-sectional schematic diagram of an example of the antifouling layer-provided transparent substrate according to the present invention.
Fig. 2 is an enlarged cross-sectional view of the antifouling layer-provided transparent substrate shown in Fig. 1.
Fig. 3 is an enlarged cross-sectional view of another example of the antifouling layer-provided transparent substrate according to the present invention.

DESCRIPTION OF EMBODIMENTS

In this specification, a compound represented by the formula (1) is referred to as a compound (1). Compounds represented by other formulae will be represented in the same manner. A group represented by the formula (11) is referred to as a group (11). The groups represented by other formulae are represented in the same manner.
The "arithmetical mean roughness Ra", "mean width RSm of the elements" and "skewness Rsk", as surface roughness parameters, are parameters of line roughness specified in JIS B0601-2001, and are calculated by using a roughness profile as a profile.
The "arithmetical mean roughness Ra", "skewness Rsk" and "mean width RSm of the elements" are values as measured by using a SURFCOM 1500SD3-12 manufactured by TOKYO SEIMITSU CO., LTD. in accordance with the

methods specified in JIS B0601-2001, JIS B0632-2001, JIS B0633-2001 and JIS B0651-2001 by using a stylus with a tip radius of 2 μm and a taper angle of 60 degrees.

The "etheric oxygen atom" means an oxygen atom that forms an etheric bond (-O-) between carbon-carbon atoms.

The chemical formula of an oxyfluoroalkylene group shall be expressed with its oxygen atom listed to the left of the fluoroalkylene group.

The "divalent organopolysiloxane residue" is a group represented by the following formula. In the following formula, $R^a$ is an alkyl group (preferably one with from 1 to 10 carbon atoms) or a phenyl group. Further, g1 is an integer of at least 1, preferably from 1 to 9, particularly preferably from 1 to 4.

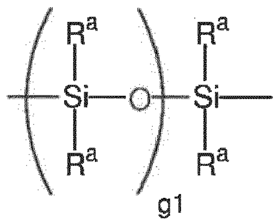

The "silphenylene skeleton group" is a group represented by $-Si(R^b)_2PhSi(R^b)_2-$ (where Ph is a phenylene group and $R^b$ is a monovalent organic group). As $R^b$, an alkyl group (preferably one with from 1 to 10 carbon atoms) is preferred.

A "dialkylsilylene group is a group represented by $-Si(R^c)_2-$ (where $R^c$ is an alkyl group (preferably one with from 1 to 10 carbon atoms)).

The "number average molecular weight" of a fluorinated compound is calculated by obtaining the number (average value) of oxyfluoroalkylene groups based on the terminal group, by $^1$H-NMR and $^{19}$F-NMR using the NMR analysis method.

The antifouling layer-provided transparent substrate of the present invention as defined in independent claim 1 has the following characteristics (1) and (2).

(1) The antifouling layer has a divalent group (hereinafter referred to also as a group (F)) represented by $-(OCF_2)_v(OCF_2CF_2)_w-$ (where v and w are each independently an integer of at least 1).

(2) The surface of the antifouling layer is such that the mean width RSm of the elements and the arithmetical mean roughness Ra satisfy the following formula (I):

$$RSm \geq Ra \times 100 + 5 \qquad (I)$$

In the antifouling layer-provided transparent substrate of the present invention, the antifouling layer is a layer having water and oil repellency on its surface. In the antifouling layer-provided transparent substrate of the present invention, the surface of the antifouling layer is meant for the main surface of the antifouling layer on the opposite side to the transparent substrate side, and the surface of the antifouling layer is the same as the main surface on the antifouling layer side of the antifouling layer-provided transparent substrate.

The antifouling layer-provided transparent substrate of the present invention has the above laminated structure, the constituent material of the antifouling layer has the characteristic of (1), and the surface shape of the antifouling layer has the characteristic of (2), and thus the antifouling layer-provided transparent substrate is excellent in antiglare and antifouling properties, especially in removability of a creamy product such as hand cream.

The antifouling layer-provided transparent substrate of the present invention is not particularly restricted in its construction, so long as it comprises a transparent substrate, antiglare layer disposed between the transparent substrate and an antifouling layer as the top surface layer on one main surface of the transparent substrate, and has the characteristics of (1) and (2). The antifouling layer-provided transparent substrate of the present invention may have various functional layers in addition to the transparent substrate and the antifouling layer, in order to achieve the characteristic of (2) or to provide additional characteristics other than (1) and (2).

For example, with regard to the characteristic of (2), the surface shape of the antifouling layer is not formed by the antifouling layer itself, but is obtained by reflecting the surface shape on the antifouling layer side of a component located on the transparent substrate side than the antifouling layer. Specifically, the characteristic of (2) in the antifouling layer-provided transparent substrate is obtained by disposing an antiglare layer with a surface shape similar to the surface shape of the antifouling layer specified in (2) on the transparent substrate side of the antifouling layer. The

functional layers other than the antiglare layer are as described later.

The characteristic of (2) in the antifouling layer-provided transparent substrate is also obtainable by letting the transparent substrate have a surface shape similar to the surface shape of the antifouling layer specified in (2), on the antifouling layer side. Further, from the viewpoint of antiglare properties, the antifouling layer-provided transparent substrate of the present invention may have a surface shape similar to (2) on the surface opposite to that having the antifouling layer.

The antifouling layer-provided transparent substrate of the present invention has antifouling properties because the constituent material of the antifouling layer satisfies (1), i.e. the antifouling layer has the group (F), and, as combined with the characteristic of (2) pertaining to the surface shape of the antifouling layer, is excellent in antifouling properties, especially in removability of a creamy product such as hand cream.

The upper limits of the number v of ($OCF_2$) units and the number w of ($OCF_2CF_2$) units in the group (F) are each independently preferably 200. v and w are each independently preferably from 5 to 200, more preferably from 10 to 200. The order of existence of the respective repeating units enclosed in parentheses with the subscript v or w is arbitrary in the formula.

The ratio of w to v (hereinafter referred to as the "w/v ratio") in the group (F) is preferably from 0.1 to 10. The w/v ratio is more preferably from 0.2 to 5, further preferably from 0.2 to 2, particularly preferably from 0.2 to 1.5, most preferably from 0.2 to 0.85.

By setting the w/v ratio to be at most 10, the slipperiness, friction durability and chemical resistance (e.g. durability against artificial sweat) of the antifouling layer, are further improved. The smaller the w/v ratio, the better the slipperiness and friction durability of the antifouling layer. On the other hand, by setting the w/v ratio to be at least 0.1, it is possible to further increase the stability of the compound to be used to form the antifouling layer having the group (F) as described later, for example, the compound having the group (F) and a reactive silyl group. The larger the w/v ratio, the better the stability of the above compound.

In one embodiment, the above w/v ratio is preferably from 0.2 to 0.95, more preferably from 0.2 to 0.9.

In one embodiment, from the viewpoint of heat resistance, the above w/v ratio is preferably at least 1.0, more preferably from 1.0 to 2.0.

The antifouling layer has a poly(oxyfluoroalkylene) chain, and preferably contains the group (F) so that part or whole of the poly(oxyfluoroalkylene) chain is composed of the group (F). The poly(oxyfluoroalkylene) chain containing the group (F) will be hereinafter referred to as the poly(oxyfluoroalkylene) chain (a).

The poly(oxyfluoroalkylene) chain (a) may contain, as a repeating unit other than the group (F), a unit (hereinafter referred to also as a unit (1)) represented by $OX^1$ ($X^1$ is a fluoroalkylene group having at least one fluorine atom, excluding $CF_2$ and $CF_2CF_2$) to such an extent that the effects of the present invention are not impaired. The number of carbon atoms in $X^1$ may be from 1 to 6, preferably from 2 to 6, particularly preferably from 2 to 3. $X^1$ may be linear or branched chain. In a case of having a plurality of units (1), two or more types of the unit (1) may be present.

The poly(oxyfluoroalkylene) chain (a) is specifically represented by $-(OCF_2)_v(OCF_2CF_2)_w(OX^1)_q-$. In this formula, v and w may be the same as described above. As q, from 0 to 10 is preferred, from 0 to 5 is more preferred, and 0 is particularly preferred.

As for the relationship of the repeating numbers of the respective units in the poly(oxyfluoroalkylene) chain (a), as the proportion of the group (F) to the total amount of the poly(oxyfluoroalkylene) chain (a) represented by $(v+w) / (v+w+q) \times 100$, at least 80 mol% is preferred, at least 90 mol% is more preferred, and 100 mol% is most preferred. The total of the repeating numbers of the respective units in the poly(oxyfluoroalkylene) chain (a), i.e. v+w+q, is preferably from 2 to 200, more preferably from 5 to 150, further preferably from 5 to 100, particularly preferably from 10 to 50.

In the poly(oxyfluoroalkylene) chain (a), the bonding order of ($OCF_2$), ($OCF_2CF_2$) and ($OX^1$) is not limited and may be arranged randomly, alternately, or in blocks. Preferably, the group (F) and the unit (1) are arranged randomly, alternately, or in blocks.

As the unit (1), for example, $-OCHF-$, $-OCF_2CHF-$, $-OCHFCF_2-$, $-OCF_2CH_2-$, $-OCH_2CF_2-$, $-OCF_2CF_2CHF-$, $-OCHFCF_2CF_2-$, $-OCF_2CF_2CH_2-$, $-OCH_2CF_2CF_2-$, $-OCF_2CF_2CF_2CH_2-$, $-OCH_2CF_2CF_2CF_2-$, $-OCF_2CF_2CF_2CF_2CH_2-$, $-OCH_2CF_2CF_2CF_2CF_2-$, $-OCF_2CF_2CF_2CF_2CF_2CH_2-$, $-OCH_2CF_2CF_2CF_2CF_2CF_2-$, $-OCF_2CF_2CF_2-$, $-OCF(CF_3)CF_2-$, $-OCF_2CF_2CF_2CF_2-$, $-OCF(CF_3)CF_2CF_2-$, $-OCF_2CF_2CF_2CF_2CF_2-$, and $-OCF_2CF_2CF_2CF_2CF_2CF_2-$ may be mentioned.

Further, the antifouling layer may contain a poly(oxyfluoroalkylene) chain other than the poly(oxyfluoroalkylene) chain (a) to such an extent that the effects of the present invention are not impaired. As the proportion of the group (F) to the total amount of the poly(oxyfluoroalkylene) chains which the antifouling layer has, at least 50 mol% is preferred, at least 75 mol% is more preferred, and 100 mol% is most preferred.

The arithmetical mean roughness Ra in the characteristic of (2) relating to the surface shape of the antifouling layer is a value obtained by averaging the absolute deviation from the reference surface, in the roughness profile included in the sampling length taken on the reference surface. The mean width RSm of the elements is a value representing the average of the lengths of the elements of the roughness profile at the sampling length. The antifouling layer-provided transparent substrate of the present invention secures sufficient antiglare properties as the surface shape of the antifouling

layer has the characteristic of (2), and, as combined with the characteristic of (1) of the constituent material of the antifouling layer, is excellent in antifouling properties, especially in removability of a creamy product such as hand cream.

Further, as for the arithmetical mean roughness Ra on the surface of the antifouling layer, at least 0.01 μm is preferred within the range satisfying formula (I) from the viewpoint of enhancing the antiglare properties of the obtainable antifouling layer-provided transparent substrate. Further, as the arithmetical mean roughness Ra, from the viewpoint of maintaining low haze and abrasion resistance, at most 0.15 μm is preferred, and at most 0.1 μm is more preferred.

The mean width RSm of the elements on the surface of the antifouling layer is preferably from 8 to 25 μm within the range that satisfies formula (I). If the mean width RSm of the elements on the surface of the antifouling layer is too large, the glare index value (Sparkle) on the surface of the antifouling layer of the antifouling layer-provided transparent substrate tends to increase, and if it is too small, the haze of the antifouling layer-provided transparent substrate tends to increase and the antiglare properties on the surface of the antifouling layer tend to decrease.

In addition to the above-described characteristics of (1) and (2), the antifouling layer-provided transparent substrate of the present invention preferably has the following characteristics.

In the antifouling layer-provided transparent substrate of the present invention, the skewness Rsk of the surface of the antifouling layer is preferably from -1.3 to 1.3, more preferably from -1.0 to 1.0.

Here, the skewness Rsk is a value of the cubic mean of the height Z(x) at the sampling length nondimensionalized by the cube of the root mean square height (Zq), and is an index that represents the bias of the concavo-convex shape against the mean line.

If the skewness Rsk is positive (Rsk>0), the concavo-convex shape tends to be biased toward the concave side and the protruding shape becomes sharper, and if it is negative (Rsk<0), the concavo-convex shape tends to be biased toward the convex side and the protruding shape becomes duller. The smaller the value of the skewness Rsk is, the lower the haze becomes.

By having the skewness Rsk in the above range, the antifouling layer-provided transparent substrate of the present invention can further improve the antifouling properties, especially the removability of a creamy product such as hand cream, on the surface of the antifouling layer. In addition, it makes it easy to satisfy both the high antiglare properties on the surface of the antifouling layer of the antifouling layer-provided transparent substrate of the present invention and the low haze of the antifouling layer-provided transparent substrate.

In the antifouling layer-provided transparent substrate of the present invention, the fluorine content surplus of the antifouling layer as calculated by the following method, is preferably from 10 to 150, more preferably from 20 to 100.

(Method of calculating fluorine content surplus)

The fluorine content surplus is calculated by the following formula (II) from the fluorine atom intensity F1 in the antifouling layer of the antifouling layer-provided transparent substrate, measured by using an X-ray fluorescence analyzer (manufactured by Rigaku Corporation, ZSX100e) under the conditions of measurement diameter: 30 mm, measurement ray: F-Kα, filter: OUT, slit: standard, spectral crystal: RX35 (manufactured by Rigaku Corporation), detector: PC, PHA: 100-300, peak angle: 38.794 deg. (20 sec), and B.G. angle: 43.000 deg. (10 sec), and the fluorine atom intensity F2 in the antifouling layer of the antifouling layer-provided transparent substrate, after wiping the surface of the antifouling layer of the antifouling layer-provided transparent substrate, with a Kimwipe (registered trademark) (pulp paper, Kimwipe S-200 (manufactured by Nippon Paper Crecia Co., Ltd.)) moistened with ASAHIKLIN (registered trademark) AE-3000 (manufactured by AGC Inc., $CF_3CH_2OCF_2CF_2H$):

$$\text{Fluorine content surplus} = (F1-F2)/F2\times 100 \qquad \text{(II)}$$

By having the fluorine content surplus of the antifouling layer in the above range, the antifouling layer-provided transparent substrate of the present invention can further improve the antifouling properties, especially the removability of a creamy product such as hand cream, on the surface of the antifouling layer.

The antifouling layer-provided transparent substrate is preferably such that on the surface of the antifouling layer, the contact angle of water is at least 90 degrees and the contact angle of oleic acid is at least 70 degrees. The contact angle is measured by using a contact angle meter (e.g. DM-701, manufactured by Kyowa Interface Science Co., Ltd.) with a 1 μL droplet under a condition within the range of 20±10°C. Measurements are conducted at five different locations on the surface of the antifouling layer, and an average value is calculated, and the value is used as the contact angle of the surface of the antifouling layer.

The haze of the antifouling layer-provided transparent substrate of the present invention is preferably from 0.1 to 15.0%, more preferably from 0.2 to 10.0%, particularly preferably from 0.5 to 5.0%. When the haze is at least the lower limit value in the above range, the antiglare properties are more excellent. When the haze is at most the upper limit value in the above range, it is less likely to impair visibility when disposed on the display surface of a display device.

The "haze" is measured by the method described in JIS K7136:2000 (ISO14782:1999).

The gloss to be measured on the surface of the antifouling layer in the antifouling layer-provided transparent substrate of the present invention is such that the 60° specular gloss (hereinafter referred to also as "G60") (unit: %) is preferably at most 140%, more preferably at most 135%, further preferably at most 130%. G60 on the surface having a concavo-convex shape is an index for the antiglare effects. When G60 is at most the above upper limit value, sufficient antiglare effects can be achieved.

in the antifouling layer-provided transparent substrate of the present invention, the removability of a creamy product adhered to the surface of the antifouling layer can be evaluated, for example, by using G60 as an index. Specifically, by setting G60 of the surface of the antifouling layer after the cream is adhered to and removed from the surface of the antifouling layer in a prescribed manner to be $G60_{after,}$ and G60 of the surface of the antifouling layer before the cream is adhered to and removed to be $G60_{before}$, the value obtained by subtracting $G60_{after}$ from $G60_{before}$ is evaluated to be $\Delta$G60. The smaller the $\Delta$G60, the better the removability of the creamy product.

G60 on the surface of the antifouling layer of an antifouling layer-provided transparent substrate is a value measured approximately at the center of the plane of the antifouling layer, for example, by the method specified for the 60° specular gloss in JIS Z8741:1997, using an all-in-one gloss meter (Rhopoint IQ, manufactured by Rhopoint Instruments) by laying a black felt on the back side to eliminate the back side reflection of the antifouling layer-provided transparent substrate. Here, in the above, the back side of the antifouling layer-provided transparent substrate refers to the surface on the side of the antifouling layer-provided transparent substrate, that does not have the antifouling layer.

The antiglare index value (Diffusion) on the surface of the antifouling layer of the antifouling layer-provided transparent substrate of the present invention is preferably at least 0.1, more preferably at least 0.2. When the antiglare index value is at least 0.1 on the surface of the antifouling layer, excellent antiglare properties will be exhibited when used in a display device.

The measurement of the antiglare index value on the surface of the antifouling layer of an antifouling layer-provided transparent substrate can be conducted by the following procedure by using a variable angle photometer GC5000L manufactured by NIPPON DENSHOKU INDUSTRIES CO., LTD. First, from the surface of the antifouling layer of the antifouling layer-provided transparent substrate, a first light is irradiated in the direction of an angle $\theta$ = -45$\pm$0.5° (hereinafter referred to also as the "direction of angle -45°") when the direction parallel to the thickness direction of the antifouling layer-provided transparent substrate is set to be an angle of 0°. The first light is reflected by the surface of the antifouling layer of the antifouling layer-provided transparent substrate. The 45° reflected light reflected in the direction of angle $\theta'$ = 45° from the surface of the antifouling layer of the antifouling layer-provided transparent substrate is received, and its luminance is measured and taken as the "luminance of the 45° reflected light".

Next, the same operation is carried out by changing the angle $\theta'$ at which the light reflected from the surface of the antifouling layer of the antifouling layer-provided transparent substrate is received, within a range of from 5 to 85°. Thus, the luminance distribution of the reflected light reflected from the surface of the antifouling layer of the antifouling layer-provided transparent substrate and received in the range of from 5 to 85°, is measured and summed to obtain the "luminance of total reflected light".

Next, the antiglare index value (Diffusion) is calculated from the following formula (i).

Antiglare index value = {(luminance of total reflected light - luminance of 45° reflected light) / (luminance of total reflected light)} (i)

The antiglare index value correlates with the results of the observer's visual judgment of the antiglare properties, and it has been confirmed that the antiglare properties show a behavior similar to the human visual sense. The smaller the antiglare index value (closer to zero), the poorer the antiglare properties, and conversely, the larger the antiglare index value, the better the antiglare properties.

The glare index value (Sparkle) on the surface of the antifouling layer of the antifouling layer-provided transparent substrate of the present invention is preferably at most 90. The glare index value can be measured by placing the antifouling layer-provided transparent substrate on the display surface of a LCD monitor so that the surface of the antifouling layer is on top, and using the Eye Scale ISC-A manufactured by I System Corporation. The higher the value of the glare index value, the greater the glare.

The haze, G60, antiglare index value, and glare index value of the antifouling layer-provided transparent substrate of the present invention can be adjusted by the skewness Rsk, arithmetical mean roughness Ra, and mean width RSm of the elements, of the surface of the antifouling layer, as described above.

As explained in the characteristic of (2) above, the surface shape of the antifouling layer is not shaped by the antifouling layer itself, but is obtained by reflecting the surface shape on the antifouling layer side of the component located on the transparent substrate side than the antifouling layer. In other words, the arithmetical mean roughness Ra, the mean width RSm of the elements, and the skewness Rsk of the surface of the antifouling layer can be adjusted,

for example, by placing the antiglare layer on the transparent substrate side of the antifouling layer and adjusting the shape of the main surface of the antiglare layer on the antifouling layer side, or by adjusting the shape of the main surface of the transparent substrate on the antifouling layer side.

Hereinafter, with reference to the drawings, the two embodiments of the antifouling layer-provided transparent substrate will be described as the antifouling layer-provided transparent substrate, of the first embodiment, and the antifouling layer-provided transparent substrate, of the second embodiment (not according to independent claim 1), respectively.

The antifouling layer-provided transparent substrate, of the first embodiment, comprises a transparent substrate, an antifouling layer having the characteristic of (1) disposed as the top surface layer on one main surface of the transparent substrate, and an antiglare layer disposed between the transparent substrate and the antifouling layer, and has such a construction that the shape of the main surface on the antifouling layer side of the antiglare layer is reflected in the surface shape of the above antifouling layer and the surface of the above antifouling layer satisfies the characteristic of (2). Fig. 1 schematically shows a cross-section of an example of the antifouling layer-provided transparent substrate 10A, of the first embodiment, of the present invention. Fig. 2 shows an enlarged cross-sectional view of the antifouling layer-provided transparent substrate 10A shown in Fig. 1.

The antifouling layer-provided transparent substrate, of the second embodiment (not according to independent claim 1), comprises a transparent substrate and an antifouling layer having the characteristic of (1) disposed as the top surface layer on one main surface of the transparent substrate, and has such a construction that the shape of the main surface on the antifouling layer side of the above transparent substrate is reflected in the surface shape of the above antifouling layer, so that the surface of the above antifouling layer satisfies the characteristic of (2). Fig. 3 schematically shows an enlarged cross-section of an antifouling layer-provided transparent substrate 10B, of the second embodiment, of the present invention.

(Antifouling layer-provided transparent substrate, of the first embodiment)

The antifouling layer-provided transparent substrate 10A shown in Fig. 1 comprises a transparent substrate 1, an antiglare layer 3 provided on the transparent substrate 1, and an antifouling layer 2 provided on the antiglare layer 3. The antifouling layer 2 constitutes the top surface layer on one main surface Sa of the transparent substrate 1.

Here, the surface 2s of the antifouling layer 2 is one surface of the antifouling layer-provided transparent substrate 10A, and in the following description, the surface of the antifouling layer-provided transparent substrate 10A on the side of the antifouling layer 2 will be referred to also as the surface 2s of the antifouling layer-provided transparent substrate 10A. The respective components of the antifouling layer-provided transparent substrate 10A will be described below.

<Transparent substrate>

The transparent substrate 1 is made of a transparent material that transmits at least visible light, and is not particularly limited so long as it is a plate-like body having two main surfaces Sa and Sb facing each other. The material constituting the transparent substrate 1 may, for example, be glass, a resin, or a combination thereof (a composite material, a laminated material, etc.). Glass may, for example, be soda-lime glass, borosilicate glass, aluminosilicate glass, phosphate glass, alkali-free glass, or the like. The resin may, for example, be polyethylene terephthalate, polycarbonate, triacetyl cellulose, polymethyl methacrylate, or the like.

In the transparent substrate 1, the main surface Sa on which the antiglare layer 3 is to be formed may be smooth or may have concavo-convex. From the viewpoint of the usefulness of providing the antiglare layer 3, the main surface Sa is preferably smooth. Here, the antiglare layer 3 provided on the transparent substrate 1 does not have to be formed over the entire surface of the main surface Sa of the transparent substrate 1. it is preferred that the antiglare layer 3 is formed in the area where the antifouling layer 2 is to be formed, for example, in the case of being used as a touch panel, at least in the area where touch operation by a finger will be applied.

The shape of the main surfaces Sa and Sb of the transparent substrate 1 may not only be flat as shown in the figure, but may also be a curved surface. In such a case, the entire surface may be composed of a curved surface, or it may be composed of curved and flat parts. Recently, in various devices equipped with display devices (TVs, personal computers, smartphones, car navigation systems, etc.), the display surface of the display device is now a curved surface. The antifouling layer-provided transparent substrate 10A, in which the main surfaces Sa and Sb of the transparent substrate 1 are shaped with curved surfaces, is useful for such display device applications. In particular, it is useful for the application to cover glass for display devices to be incorporated in instrument panels for automobiles.

As the transparent substrate 1, a glass substrate is preferred from the viewpoint of transparency, mechanical strength, etc. The production method of the glass substrate is not particularly limited. A glass substrate can be produced by feeding the desired glass materials into a melting furnace, heating and melting them, clarifying them, and then feeding

them into a forming device to form molten glass, followed by annealing. The method of forming the glass substrate is not particularly limited. For example, glass substrates formed by the float process, fusion method, down-draw method, etc. can be used.

The thickness of the transparent substrate 1 may be appropriately selected depending on the application. For example, if the glass substrate is to be used as the transparent substrate 1, its thickness is preferably from 0.1 to 5 mm, more preferably from 0.2 to 2.5 mm.

In a case where the glass substrate is to be used as the transparent substrate 1, it is preferably a glass substrate having tempering treatment applied to the main surface of the glass substrate. The tempering treatment improves the strength of the glass, and thus, for example, makes it possible to reduce its thickness while maintaining its strength. In the case of using the air cooling tempering method as described below, the antiglare layer 3 may be formed on an untempered glass substrate, and then, the tempering treatment may be carried out.

The tempering treatment may be a treatment for forming a compressive stress layer on the glass substrate surface by the air cooling tempering method (physical tempering method) or chemical tempering method. The compressive stress layer on the glass substrate surface improves the strength of the glass substrate against scratches and impacts. Of these, the chemical tempering method is preferred because it can sufficiently strengthen the glass substrate even when the thickness of the glass substrate becomes thin (e.g. less than 2 mm).

In the chemical tempering method, the glass substrate is immersed in a molten salt at a temperature below the strain point temperature of the glass, to exchange ions (e.g. sodium ions) in the glass substrate surface layer for ions with a larger ionic radius (e.g. potassium ions). This creates a compressive stress in the glass substrate surface layer.

A glass substrate having chemical tempering applied thereto (chemically tempered glass substrate) is preferably such that, for example, the surface compressive stress (CS) is from 450 to 1,200 MPa, and the stress layer depth (DOL) is from 10 to 50 μm.

The antifouling layer-provided transparent substrate 10A may have a functional layer such as an undercoat layer, an adhesion layer or a protective layer between the transparent substrate 1 and the antiglare layer 3. The undercoat layer has a function as an alkali barrier layer or a wide-band low refractive index layer. As the undercoat layer, a layer formed by applying an undercoat layer forming composition containing a hydrolysate of an alkoxysilane (sol-gel silica) to the transparent substrate 1 is preferred.

<Antiglare layer>

The antiglare layer 3 is constructed so that the shape of the main surface 3s on the antifouling layer 2 side is reflected in the antifouling layer 2 to make the surface 2s of the antifouling layer 2 satisfy the characteristic of (2).

The shape of the main surface 3s of the antiglare layer 3 on the antifouling layer 2 side is constructed, for example, so as to satisfy the characteristic of (2). The values of various parameters, the arithmetical mean roughness Ra, the skewness Rsk and the mean width RSm of the elements, indicating the surface shape of the main surface 3s of the antiglare layer 3, can be made to be the same as the values at the surface of the antifouling layer as described above. G60, the antiglare index value and the glare index value on the main surface 3s of the antiglare layer 3 on the antifouling layer 2 side preferably become to be within the above ranges described as the preferred ranges of these physical properties on the surface 2s of the antifouling layer 2.

The antiglare layer 3 preferably has an average film thickness of from 15 to 1,500 nm. When the average thickness of the antiglare layer 3 is from 15 to 50 nm, it is easy to lower the haze and reduce the glare index value. The average film thickness of the antiglare layer 3 being at least 50 nm is more preferred, because it is thereby possible to provide sufficient antiglare properties to the antifouling layer-provided transparent substrate 10A. The average film thickness of the antiglare layer 3 being at most 1,500 nm, is preferred, because it is thereby easy to satisfy both the optical properties of the antiglare index value and haze in good ranges.

Here, the average film thickness of the antiglare layer 3 can be measured by observing the cross-section of the antiglare layer 3 by a scanning microscope (SEM) at a magnification of, for example, 10,000 times, after treating it with focused ion beam processing, and measuring the thickness from the interface between the transparent substrate 1 and the antiglare layer 3 to the surface of the antiglare layer 3 over the entire imaging range. The film thickness can be calculated by using digital data from the SEM imaging and image processing software.

The antiglare layer 3 may be formed by covering the entire main surface Sa of the transparent substrate 1 without gaps. Alternatively, a part of the main surface Sa of the transparent substrate 1 may be exposed without the antiglare layer 3 being formed. Specifically, the antiglare layer 3 may be formed in the form of islands. When the thickness of the antiglare layer 3 is, for example, at most 300 nm, there may be a case where the antiglare layer 3 is formed discontinuously on the main surface of the transparent substrate 1, and a part of the main surface of the transparent substrate 1 may be exposed.

The surface shape at the main surface 3s of the antiglare layer 3 may be, for example, a concavo-convex shape having a first convex portion with a base diameter of at least 1 μm and a second convex portion with a base diameter

of less than 1 μm. It may have a structure wherein the above first convex portions, or second convex portions, or the first and second convex portions are overlapped. Such a surface structure can be observed by analyzing the laser microscope measurement data by an image processing software.

The antiglare layer 3 can be formed, for example, by applying a liquid composition for forming antiglare layer (hereinafter referred to as a liquid composition (X1)) on the main surface Sa of the transparent substrate 1 and curing the same. The film thickness of the antiglare layer 3, as well as the arithmetical mean roughness Ra, the skewness Rsk and the mean width RSm of the elements, at the main surface 3s on the antifouling layer 2 side, can be adjusted by the composition of the liquid composition (X1) to be used for forming the antiglare layer 3, the conditions for applying the liquid composition (X1) to the transparent substrate 1, etc.

The material to constitute the antiglare layer 3 may, for example, be a material which contains a binder containing silica as the main component and which may further optionally contain fine particles. The term "containing silica as the main component" means that $SiO_2$ is contained in an amount of at least 50 mass%. The antiglare layer 3 using a binder containing silica as the main component is excellent in chemical stability, in adhesion to the substrate when the transparent substrate is a glass substrate, and in scratch resistance.

A liquid composition (X1) for forming an antiglare layer 3 made of a material which contains a binder containing silica as the main component, may, for example, be a composition which contains a silica precursor and a liquid medium, and which optionally contains fine particles.

The "silica precursor" means a substance that can form a matrix containing silica as the main component, by siloxane bonds, etc. As the silica precursor, a silane compound such as a known alkoxysilane or its hydrolytic condensation product may be used. As the silica precursor, two or more types may be used in combination.

From the viewpoint of preventing cracking or peeling of the antiglare layer 3, the silica precursor preferably contains one or both of an alkoxysilane which has a carbon atom directly bonded to the silicon atom and a hydrolytic condensation product thereof. Further, from the viewpoint of abrasion resistance strength of the antiglare layer 3, the silica precursor preferably contains one or both of a tetraalkoxysilane and a hydrolytic condensation product thereof.

The content of the silica precursor in the liquid composition (X1) is preferably from 30 to 90 mass%, more preferably from 40 to 90 mass%, as calculated as $SiO_2$ to the total solid content. The solid content of the liquid composition (X1) is the sum of the contents of all components in the liquid composition (X1), excluding components that disappear during the process of forming the antiglare layer 3, such as the liquid medium, and the content of the silica precursor is as calculated as $SiO_2$ as described above.

The liquid composition (X1) for forming the antiglare layer 3 may contain fine particles, as the case requires. When the liquid composition (X1) contains fine particles, it is easy to make the surface shape of the obtainable antiglare layer 3 be a concavo-convex shape having the above characteristics.

When the constituent material of the antiglare layer 3 contains silica as the main component, as the fine particles, silica particles such as spherical silica particles, scaly silica particles, rod-shaped silica particles or needle-shaped silica particles are preferred from the viewpoint of suppressing the increase in the refractive index of the film and lowering the reflectance. Spherical silica particles are preferred from such a viewpoint that it becomes easy to obtain a lower haze rate. Scaly silica particles are preferred from such a viewpoint that antiglare effects can be obtained with a small amount and cracks or peeling of the antiglare layer 3 can be suppressed.

Scaly silica particles consist, for example, of flaky silica primary particles and silica secondary particles that are formed by multiple flaky silica primary particles with their faces oriented and overlapping each other in a parallel manner. The silica secondary particles usually have a particle morphology with a stacked structure. The scaly silica particles may consist of only either one of the silica primary particles and the silica secondary particles.

The average particle diameter of the scaly silica particles is preferably from 0.08 to 0.42 μm, more preferably from 0.17 to 0.21 μm, from the viewpoint of suppressing cracking or film peeling and from the viewpoint of dispersion stability in the dispersion.

The thickness of the silica primary particles is preferably from 0.001 to 0.1 μm. When the thickness of the silica primary particles is within the above range, it is possible to form scaly silica secondary particles with one or more of them with their faces oriented and overlapping each other in a parallel manner. The aspect ratio of the silica primary particles is preferably at least 2, more preferably at least 5, further preferably at least 10.

The thickness of the silica secondary particles is preferably from 0.001 to 1 μm, more preferably from 0.005 to 0.5 μm. The aspect ratio to the thickness of the silica secondary particles is preferably at least 2, more preferably at least 5, further preferably at least 10. It is preferred that the silica secondary particles exist independently of each other without being fused.

As the scaly silica particles, commercially available ones may be used, or prepared ones may be used. The scaly silica particles may be used as a powder or as a dispersion having them dispersed in a dispersant. The concentration of the scaly silica particles in the dispersion is preferably from 1 to 80 mass%. Commercially available products of scaly silica particles may, for example, be the SUNLOVELY (registered trademark) series manufactured by AGC Si-Tech Co., Ltd.

The content of fine particles in the liquid composition (X1) is preferably from 0 to 40 mass%, more preferably from 0 to 30 mass%, as the proportion of fine particles to the total mass (100 mass%) of the silica precursor and fine particles (provided that the silica precursor is converted to $SiO_2$). When the content of fine particles is at most the upper limit value in the above range, adhesion to the transparent substrate 1 will be excellent.

When the fine particles are spherical silica particles, the proportion of fine particles to the total mass (100 mass%) of the silica precursor and fine particles is preferably from 1 to 40 mass%, more preferably from 2 to 30 mass%.

When the fine particles are scaly silica particles, the proportion of fine particles to the total mass (100 mass%) of the silica precursor and fine particles is preferably from 0.5 to 30 mass%, more preferably from 1 to 20 mass%.

When the proportion of fine particles is at least the lower limit value in the above range, the low glare property will be more excellent. When the proportion of fine particles is at most the upper limit value in the above range, a lower haze rate will be easily obtainable. Further, the adhesion strength between the antiglare layer 3 and the transparent substrate 1 will be more excellent when the silica precursor is included in at least a certain proportion.

The liquid medium is preferably one to dissolve or disperse the silica precursor, and one to disperse fine particles of optional components is preferably employed. The liquid medium may be one having both of the function as a solvent or dispersant that dissolves or disperses the silica precursor and the function as a dispersant that disperses the fine particles.

The liquid medium preferably contains at least a liquid medium with a boiling point of at most 150°C. The boiling point of the liquid medium with a boiling point of at most 150°C is preferably from 50 to 145°C, more preferably from 55 to 140°C. By setting the boiling point of the liquid medium with a boiling point of at most 150°C to be within the above preferred range, when the liquid composition (X1) is applied to and baked on the main surface Sa of the transparent substrate 1 by using an electrostatic coating apparatus equipped with an electrostatic coating gun having a rotating atomizing head to form the antiglare layer 3, the surface shape of the obtainable antiglare layer 3 can be easily made to be a concavo-convex shape having the above-mentioned characteristics.

As the liquid medium with a boiling point of at most 150°C, it is possible to use, for example, water, or an alcohol (methanol, ethanol, isopropyl alcohol, n-butyl alcohol, isobutyl alcohol, 1-pentanol, etc.), a ketone (acetone, methyl ethyl ketone, methyl isobutyl ketone, etc.), an ether (tetrahydrofuran, 1,4-dioxane, etc.), a cellosolve (methyl cellosolve, ethyl cellosolve, etc.), an ester (methyl acetate, ethyl acetate, etc.) or a glycol ether (ethylene glycol monomethyl ether, ethylene glycol monoethyl ether, etc.), with a boiling point of at most 150°C.

Since water is required for hydrolysis of an alkoxysilane, etc. in the silica precursor, the liquid medium contains at least water unless the liquid medium is replaced after the hydrolysis. The liquid medium may further contain a liquid medium with a boiling point exceeding 150°C, as the case requires.

The liquid medium with a boiling point exceeding 150°C may, for example, be an alcohol, a ketone, an ether, a cellosolve, an ester, a glycol ether, a nitrogen-containing compound or a sulfur-containing compound, with a boiling point exceeding 150°C. The alcohol may be diacetone alcohol, 1-hexanol, ethylene glycol, propylene glycol or the like. The nitrogen-containing compound may be N,N-dimethylacetamide, N,N-dimethylformamide, N-methylpyrrolidone or the like. The glycol ether may be ethylene glycol monobutyl ether or the like. The sulfur-containing compound may be dimethylsulfoxide or the like.

The content of the liquid medium in the liquid composition (X1) is an amount based on the solid content concentration of the liquid composition (X1). The solid content concentration of the liquid composition (X1) is preferably from 0.05 to 2 mass%, more preferably from 0.1 to 1 mass%, to the total amount (100 mass%) of the liquid composition (X1). When the solid content concentration is at least the lower limit value in the above range, the liquid volume of the liquid composition (X1) can be reduced. When the solid content concentration is at most the upper limit value in the above range, it is easier to form a concavo-convex structure having a second convex portion. Further, the uniformity of the film thickness of the antiglare layer 3 will be improved.

The content of the liquid medium with a boiling point of at most 150°C is preferably at least 86 mass%, more preferably at least 90 mass%, to the total amount of the liquid medium. The content of the liquid medium with a boiling point of at most 150°C may be 100 mass% to the total amount of the liquid medium.

By containing a liquid medium with a boiling point exceeding 150°C, the skewness Rsk of the obtainable antiglare layer 3 can be lowered, making it easier to satisfy both excellent antiglare properties and low haze. When the liquid medium contains a liquid medium with a boiling point exceeding 150°C, the proportion of the liquid medium with a boiling point exceeding 150°C to the total amount of the liquid medium is preferably from 0.01 to 14 mass%.

In addition to the above-mentioned respective components, the liquid composition (X1) may contain a binder other than the silica precursor, additives, etc. The binder other than the silica precursor may be an inorganic material, a resin or the like that is dissolved or dispersed in the liquid medium. The inorganic material may, for example, be a metal oxide other than silica, such as a precursor of titania, zirconia or the like. The resin may be a thermoplastic resin, a thermosetting resin, a UV-curable resin or the like.

The additives may, for example, be a dispersing agent to inhibit aggregation of fine particles in the liquid composition (X1), a conductive agent, an ultraviolet absorber, an infrared reflector, an infrared absorber, an anti-reflective

agent, a surfactant to improve leveling, a metal compound to improve durability or the like. The additives may further include known catalysts such as acid or basic catalysts that promote hydrolysis and condensation reactions of reactive silyl groups such as hydrolyzable groups possessed by the silica precursor.

The dispersant may be an unsaturated carboxylic acid polymer, a cellulose derivative, an organic acid (except for an unsaturated carboxylic acid polymer), a terpene compound or the like. As the dispersant, one type may be used alone, or two or more types may be used in combination.

The antiglare layer 3 can be formed, for example, by preparing a liquid composition (X1) containing the above-mentioned respective components, then applying the liquid composition (X1) on the main surface Sa of the transparent substrate 1, and then baking and curing it.

The liquid composition (X1) can be prepared by mixing the above-mentioned respective components. The viscosity (hereinafter referred to also as "liquid viscosity") of the liquid composition (X1) at the application temperature is preferably at most 0.003 Pa·s, particularly preferably from 0.001 to 0.003 Pa·s. When the liquid viscosity is at most the above upper limit value, droplets to be formed when the liquid composition (X1) is sprayed become finer, and the antiglare layer 3 with the desired surface shape will be easily formed. When the liquid viscosity is at least the above lower limit value, the surface concavo-convex shape of the antiglare layer 3 becomes uniform. The viscosity of the liquid composition (X1) is a value to be measured by a B-type viscometer.

The liquid composition (X1) prepared in this manner is applied to the main surface Sa of the transparent substrate 1 by the spray coating method. The application of the liquid composition (X1) on the transparent substrate 1 can be conducted, for example, by charging and spraying the liquid composition (X1) by using an electrostatic coating device equipped with an electrostatic coating gun having a rotating atomizing head. As a result, a coating film of the liquid composition (X1) is formed on the main surface Sa of the transparent substrate 1. The electrostatic coating device is equipped with a gun body and a rotating atomizing head, and by driving the rotating atomizing head, the liquid composition (X1) supplied to the rotating atomizing head is atomized by centrifugal force and released, whereby the liquid composition (X1) is sprayed toward the main surface Sa of the transparent substrate 1.

As long as the electrostatic coating device is equipped with an electrostatic coating gun having a rotating atomization head, any known electrostatic coating device can be employed. For the electrostatic coating gun, any known electrostatic coating gun can be used as long as it has a rotating atomization head. However, the means of applying the liquid composition (X1) is not limited to the above electrostatic coating device, but any known application means can be used.

Next, the coating film of the liquid composition (X1) formed on the main surface Sa of the transparent substrate 1 is baked. As a result, volatile components such as the liquid medium in the coating film are volatilized and removed, and the silica precursor in the coating film is converted to silica (for example, when the silica precursor is a silane compound having hydrolyzable groups bonded to the silicon atom, the hydrolyzable groups are almost decomposed and condensation of the hydrolysate proceeds), and at the same time, the film densifies, and the antiglare layer 3 is formed.

The baking may be carried out at the same time as the application by heating the transparent substrate 1 at the time of applying the liquid composition (X1) to the transparent substrate 1, or may be carried out by heating the coating film after applying the liquid composition (X1) to the transparent substrate 1. The baking temperature is preferably at least 30°C, and, for example, in a case where the transparent substrate 1 is glass, from 100 to 750°C is more preferred, and from 150 to 550°C is further preferred.

According to the above-described method for forming the antiglare layer 3, it is possible to form an antiglare layer 3 having a desired surface shape at the main surface 3s on the antiglare layer 3 side by spraying the liquid composition (X1) preferably by using an electrostatic coating device equipped with a rotating atomizing head. This is because droplets of the liquid composition (X1) adhere to the transparent substrate 1 at a slower rate than when a conventional general-purpose spraying method other than the electrostatic coating device (e.g. a method using a two-fluid nozzle in particular) is applied, and the liquid medium in the adhered droplets volatilizes quickly, whereby it becomes difficult for the droplets to spread on the transparent substrate 1, and the film is formed while maintaining its shape at the time of attachment.

Further, in the above described method for forming the antiglare layer 3, it is possible to control the surface shape at the main surface 3s of the antiglare layer 3 to be formed, by the viscosity of the liquid composition (X1), the coating conditions, the baking temperature, etc.

<Antifouling layer>

The antifouling layer 2 is located as one top surface layer of the antifouling layer-provided transparent substrate 10A and is a layer having the group (F). The antifouling layer 2 is formed on the main surface 3s of the antiglare layer 3 and has a surface 2s that follows the shape of the main surface 3s. The surface 2s of the antifouling layer 2 has the characteristic of (2). The preferred values of various parameters indicating the surface shape in the surface 2s of the antifouling layer 2 are as described above.

The thickness of the antifouling layer 2 is preferably from 2 to 30 nm, more preferably from 5 to 20 nm. When the thickness of the antifouling layer 2 is at least 2 nm, the antifouling layer 2 will be one excellent in abrasion resistance in addition to in antifouling properties. Further, sufficient water and oil repellency will be exhibited, and finger slippage on the surface of the antifouling layer 2 will be excellent. When the film thickness of the antifouling layer 2 is at most 30 nm, the surface 2s can be made to sufficiently follow the shape of the main surface 3s of the antiglare layer 3, such being preferred.

Further, the shape of the main surface 3s of the antiglare layer 3 and the surface shape at the surface 2s of the antifouling layer 2 do not have to match exactly, so long as the surface shape at the surface 2s of the antiglare layer 2 satisfies at least the characteristic of (2).

The thickness of the antifouling layer 2 can be obtained, for example, by obtaining an interference pattern of reflected X-rays by the X-ray reflectivity method by using an X-ray diffractometer for thin film analysis, ATX-G (manufactured by Rigaku Corporation), and calculating from the vibration period of the interference pattern. Alternatively, it can be obtained by preparing an antireflection film, of which the reflection spectra have been measured in advance and forming an antifouling layer 2 on it under the same conditions as the sample, of which the thickness of the antifouling layer 2 is to be measured, and then calculating from the reflection spectra and refractive index of the antifouling layer 2.

As for the water and oil repellency of the antifouling layer 2, as shown above, it is preferred that the contact angle of water is at least 90 degrees and the contact angle of oleic acid is at least 70 degrees. By having the water and oil repellency, the antifouling layer 2 has antifouling properties and good finger slippage. As the antifouling layer 2, an AFP (anti fingerprint) layer or the like may be mentioned.

The antifouling layer 2 is not limited so long as the constituent material has the group (F). For example, preferred is a layer to be formed by using a compound having a poly(oxyfluoroalkylene) chain (a) containing the group (F) and a reactive silyl group (hereinafter referred to as a "compound (A)"). The reactive silyl group is a group (hereinafter referred to also as a "group (Y)") having a hydrolyzable group and/or a hydroxy group bonded to the silicon atom.

The compound (A) is preferably a compound (1). In the compound (1), $-(OCF_2)_v(OCF_2CF_2)_w(OX^1)_q-$ corresponds to the poly(oxyfluoroalkylene) chain (a) of the compound (A), and $-Si(R^1)_{n1}L^1_{3-n1}$ corresponds to the group (Y). $Z^1$ and $Q^1$ are the linking groups (hereinafter referred to also as "linking groups (a)") that link the poly(oxyfluoroalkylene) chain (a) and the group (Y).

$$[A^1-(OCF_2)_v(OCF_2CF_2)_w(OX^1)_q-]_{j1}Z^1[-Si(R^1)_{n1}L^1_{3-n1}]_{g1} \qquad (1)$$

Here, in the formula (1),

$A^1$ is a perfluoroalkyl group or $-Q^1[-Si(R^1)_{n1}L^1_{3-n1}]_{k1}$,
$X^1$ is a fluoroalkylene group having at least one fluorine atom,
v and w are each independently an integer of at least 1,
q is an integer of from 0 to 10,
j1, g1, and k1 are each an integer of at least 1,
$Z^1$ is a (j1+g1)-valent linking group,
$R^1$ is independently a monovalent hydrocarbon group,
$L^1$ is independently a hydrolyzable group or a hydroxy group,
n1 is independently an integer of from 0 to 2, and
$Q^1$ is a (k1+1)-valent linking group.

When A' is a perfluoroalkyl group, the number of carbon atoms in the perfluoroalkyl group is preferably from 1 to 20, more preferably from 1 to 10, further preferably from 1 to 6, particularly preferably from 1 to 3, from the viewpoint of the more excellent friction resistance of the antifouling layer. The perfluoroalkyl group may be linear or branched-chain.

Specific examples of the perfluoroalkyl group may be $CF_3-$, $CF_3CF_2-$, $CF_3CF_2CF_2-$, $CF_3CF_2CF_2CF_2-$, $CF_3CF_2CF_2CF_2CF_2-$, $CF_3CF_2CF_2CF_2CF_2CF_2-$, and $CF_3CF(CF_3)-$. As the perfluoroalkyl group, $CF_3-$, $CF_3CF_2-$ or $CF_3CF_2CF_2-$is preferred from such a viewpoint that the water and oil repellency of the antifouling layer will be superior.

$-(OCF_2)_v(OCF_2CF_2)_w(OX^1)_q-$ is the same as described above, including the preferred embodiment. Hereinafter, $-(OCF_2)_v(OCF_2CF_2)_w(OX^1)_q-$ will be referred to also as "PFPEa".

The compound (1) may have at least one $-Si(R^1)_{n1}L^1_{3-n1}$ (hereinafter referred to also as a "group (Y1)"). As for the number of groups (Y1), at least 2 is preferred, from 2 to 10 is more preferred, from 2 to 5 is further preferred, and 2 or 3 is particularly preferred from such a viewpoint that the friction resistance of the antifouling layer will be superior. When there are multiple groups (Y1) in one molecule, the multiple groups (Y1) may be the same or different. It is preferred that they are the same from the viewpoint of ease for obtaining raw materials and ease for producing the compound (1).

$R^1$ is a monovalent hydrocarbon group, preferably a monovalent saturated hydrocarbon group. The number of carbon atoms in $R^1$ is preferably from 1 to 6, more preferably from 1 to 3, particularly preferably from 1 to 2.

$L^1$ is a hydrolyzable group or a hydroxy group. Specific examples of the hydrolyzable group in $L^1$ may be an alkoxy group, a halogen atom, an acyl group, and an isocyanate group (-NCO). As the alkoxy group, a $C_{1-4}$ alkoxy group is preferred. As the halogen atom, a chlorine atom is preferred.

As L', a $C_{1-4}$ alkoxy group or a halogen atom is preferred from such a viewpoint that it will be easier to produce the compound (1). As $L^1$, from such a viewpoint that there will be less outgassing during coating, and the storage stability of the composition containing the compound (1), such as the liquid composition (X2) as described below or the composition for vapor deposition, will be more excellent, a $C_{1-4}$ alkoxy group is preferred, and when long-term storage stability of the composition containing the compound (1) is required, an ethoxy group is particularly preferred and when the reaction time after application is made to be short, a methoxy group is particularly preferred.

n1 is an integer of from 0 and 2. n1 is preferably 0 or 1, and 0 is particularly preferred. The presence of a plurality of $L^1$ further strengthens the adhesion of the antiglare layer to the base material. Here, in this embodiment, the base material is an antiglare layer, and in the second embodiment, the base material is a transparent substrate. When n1 is at most 1, the plurality of $L^1$ present in one molecule may be the same or different. However, from the viewpoint of ease for obtaining raw materials and ease for producing the compound (1), it is preferred that they are the same. When n1 is 2, the plurality of $R^1$ present in one molecule may be the same or different, but it is preferred that they are the same from the viewpoint of ease for obtaining raw materials and ease for producing the compound (1).

j1 is an integer of at least 1, and from such a viewpoint that the water and oil repellency of the antifouling layer will be superior, an integer of from 1 to 5 is preferred. When $A^1$ is $-Q^1[-Si(R^1)_{n1}L^1_{3-n1}]_{k1}$, j1 is preferably 1. Further, from the viewpoint of ease for producing the compound (1), j1 is particularly preferably 1.

g1 is an integer of at least 1, and from such a viewpoint that the friction resistance of the antifouling layer will be superior, an integer of from 2 to 4 is preferred, 2 or 3 is more preferred, and 3 is particularly preferred.

In the compound (1), $k1\times j1+g1$ is the number of groups (Y1). So that this number will be in the above preferred range, k1, j1 and g1 are adjusted. From the viewpoint of the adhesion of the antifouling layer to the base material, it is preferred that k1 is at least 1. From the viewpoint of the water and oil repellency of the antifouling layer, it is preferred that $A^1$ is a perfluoroalkyl group.

In the compound (1), $Q^1$ is a (k1+1)-valent linking group (a), and $Z^1$ is a (j1+g1)-valent linking group (a). When the valence is the same, $Z^1$ and $Q^1$ may be the same or different, but it is preferred that they are the same. When the valence is different, $Z^1$ and $Q^1$ are different, but preferably have similar structures. The following explanation will be made with reference to $Z^1$ as an example, but the same will be applicable to $Q^1$.

Here, in the formula (1), the separation of $Z^1$ being the linking group (a), and PFPEa, will be explained. The linking group $Z^1$ is bonded to the side not bonded to an oxygen atom, in a fluoroalkylene group of a unit most remote from A' among v, w, and q fluoroalkylene units of $(OCF_2)$, $(OCF_2CF_2)$ and (OX'), respectively, in $[A^1-(OCF_2)_v(OCF_2CF_2)_w(OX^1)_q-]-$. The terminal on the side not bonded to an oxygen atom of the fluoroalkylene group is the carbon atom bonded to a fluorine atom and is the carbon atom most remote from A'.

The valence of the linking group (a) is at least 2, and from 3 to 11 is preferred, from 3 to 6 is more preferred, and 3 or 4 is particularly preferred.

The linking group (a) is preferably a linking group with a valence of from 3 to 4 having a structure that branches at one carbon atom, silicon atom or nitrogen atom. In this case, the branched terminals are bonded to the group (Y) and the poly(oxyfluoroalkylene) chain (a). A linking group having multiple branching elements, or a linking group with a valence exceeding 4, is also acceptable. The element that serves as the starting point for the branching of the linking group will hereinafter be referred to also as the branching element.

As the linking group (a), the following linking groups (a-1) to (a-5) may be mentioned. As the linking group (a), linking group (a-1), linking group (a-2), or linking group (a-3) is preferred.

Linking group (a-1): Group having an amide bond (but not including an organopolysiloxane residue and silphenylene skeleton group)

Linking group (a-2): Group having an etheric oxygen atom (but not including an amide bond, organopolysiloxane residue and silphenylene skeleton group)

Linking group (a-3): Aliphatic saturated hydrocarbon group that may have a nitrogen atom or silicon atom between carbon-carbon atoms

Linking group (a-4): Group having an organopolysiloxane residue or a silphenylene skeleton group

Linking group (a-5): Group not classified in any of the linking groups (a-1) to (a-4)

$Z^1$ may be a group with the above valence that does not impair the effects of the present invention. Specific examples of $Z^1$ will be described by using group (11) and group (12) as groups containing group (Y1). In the formula (11) and the formula (12), $Z^1$ is a group having $Si(R^1)_{n1}L^1_{3-n1}$ excluded from group (11) and group (12).

$$-Q^a-X^{31}(-Q^b-Si(R^1)_{n1}L^1_{3-n1})_h(-R^{31})i \qquad (11)$$

$$-Q^c-[CH_2C(R^{32})(-Q^d-Si(R^1)_{n1}L^1_{3-n1})]_y-R^{33} \qquad (12)$$

The definitions of the respective symbols in the formula (11) and the formula (12) are as follows.

The definitions of $R^1$, $L^1$ and n1 are synonymous with the definitions of the respective groups in the formula (1).

$Q^a$ is a single bond or a divalent linking group.

The divalent linking group may, for example, be a divalent hydrocarbon group, a divalent heterocyclic group, -O-, -S-, $-SO_2-$, $-N(R^d)-$, -C(O)-, or $-Si(R^a)_2-$, and a group having two or more of these groups combined.

The above divalent hydrocarbon group may be a divalent saturated hydrocarbon group, a divalent aromatic hydrocarbon group, an alkenylene group, or an alkynylene group. The divalent saturated hydrocarbon group may be linear, branched-chain, or cyclic, and, for example, an alkylene group may be mentioned. Its carbon number is preferably from 1 to 20. Further, as the divalent aromatic hydrocarbon group, one having from 5 to 20 carbon atoms is preferred, and, for example, a phenylene group may be mentioned. Other than that, it may be a $C_{2-20}$ alkenylene group, or a $C_{2-20}$ alkynylene group.

The above $R^a$ is an alkyl group (preferably one having from 1 to 10 carbon atoms) or a phenyl group. The above $R^d$ is a hydrogen atom or an alkyl group (preferably one having from 1 to 10 carbon atoms).

Further, a group having two or more of these groups combined, may, for example, be -OC(O)-, $-C(O)N(R^d)-$, an alkylene group-O-alkylene group, an alkylene group-OC(O)-alkylene group, an alkylene group-$Si(R^a)_2$-phenylene group-$Si(R^a)_2$, etc.

$X^{31}$ is a branching element selected from a carbon atom, a nitrogen atom and a silicon atom, a single bond, or a 2- to 8-valent organopolysiloxane residue.

The 2- to 8-valent organopolysiloxane residue may be a divalent organopolysiloxane residue or the (w+1)-valent organopolysiloxane residue as described later.

$Q^b$ is, when $Q^a$ and $X^{31}$ are single bonds, an alkylene group or a group having an etheric oxygen atom and/or an amide bond between carbon-carbon atoms of an alkylene group with two or more carbon atoms; and, otherwise, it is a single bond or a divalent linking group. The number of carbon atoms in the alkylene group is preferably from 1 to 20, particularly preferably from 1 to 10. The number of carbon atoms in the group having an ether oxygen atom and/or an amide bond between carbon-carbon atoms of an alkylene group with two or more carbon atoms, is preferably from 2 to 20, particularly preferably from 2 to 10.

The definition of the divalent linking group is synonymous with the definition as described above for $Q^a$.

$R^{31}$ is a hydroxy group or an alkyl group.

The number of carbon atoms in the alkyl group is preferably from 1 to 5, more preferably from 1 to 3, particularly preferably 1.

When $X^{31}$ is a single bond, h is 1, and i is 0,

when $X^{31}$ is a nitrogen atom, h is an integer of from 1 to 2, i is an integer of from 0 to 1, and h+i=2,
when $X^{31}$ is a carbon atom or a silicon atom, h is an integer of from 1 to 3, i is an integer of from 0 to 2, and h+i=3,
when $X^{31}$ is a 2- to 8-valent organopolysiloxane residue, h is an integer of from 1 to 7, i is an integer of from 0 to 6, and h+i=1 to 7.

When there are two or more $(-Q^b-Si(R^1)_{n1}L^1_{3-n1})$, the two or more $(-Q^b-Si(R^1)_{n1}L^1_{3-n1})$ may be the same or different. When there are two or more $(-R^{31})$, the two or more $(-R^{31})$ may be the same or different.

$Q^c$ is a single bond, an alkylene group, or a group having an etheric oxygen atom between carbon-carbon atoms of an alkylene group with two or more carbon atoms. The number of carbon atoms in the alkylene group is preferably from 1 to 10, particularly preferably from 2 to 6. The number of carbon atoms in the group having an etheric oxygen atom between carbon-carbon atoms of an alkylene group with two or more carbon atoms, is preferably from 2 to 10, particularly preferably from 2 to 6.

$R^{32}$ is a hydrogen atom or a $C_{1-10}$ alkyl group, and is preferably a hydrogen atom from the viewpoint of ease for producing the compound.

The alkyl group is preferably a methyl group.

$Q^d$ is a single bond or an alkylene group. The number of carbon atoms in the alkylene group is preferably from 1 to 10, particularly preferably from 1 to 6. As $Q^d$, a single bond and $-CH_2-$ are preferred from the viewpoint of ease for producing the compound.

$R^{33}$ is a hydrogen atom or a halogen atom, and is preferably a hydrogen atom from the viewpoint of ease for producing the compound.

y is an integer of from 1 to 10, and from 1 to 6 is preferred.

Two or more $[CH_2C(R^{32})(-Q^d-Si(R^1)_{n1}L^1_{3-n1})]$ may be the same or different.

In the following, with respect to $Z^1$ as a linking group (a), a more specific description will be made with reference to group (11) as an example, by using the following groups (11-1) to (11-6) depending on the number of h, i.e. the number of groups (Y1).

$-Q^{a1}-Q^{b1}-Si(R^1)_{n1}L^1_{3-n1}$ (11-1)

$-Q^{a2}-N[-Q^{b2}-Si(R^1)_{n1}L^1_{3-n1}]_2$ (11-2)

$-Q^{a3}-X^{34}(R^g)[-Q^{b3}-Si(R^1)_{n1}L^1_{3-n1}]2$ (11-3)

$-Q^{a4}-C[-Q^{b4}-Si(R^1)_{n1}L^1_{3-n1}]_3$ (11-4)

$-Q^{a5}-Si[-Q^{b5}-Si(R^1)_{n1}L^1_{3-n1}]_3$ (11-5)

$-Q^{a6}-X^{35}[-Q^{b6}-Si(R^1)_{n1}L^1_{3-n1}]_w$ (11-6)

Here, in the formulae (11-1) to (11-6), the definitions of $R^1$, $L^1$ and n1 are as described above.
Group (11-1) is an example of $Z^1$ when one group (Y1) is present. The definitions of the respective symbols in group (11-1) are as follows.
$Q^{a1}$ is $(X^{32})_{s1}$, where $X^{32}$ is -O- or $-C(O)N(R^d)-$ (provided that N in the formula is bonded to $Q^{b1}$).
The definition of $R^d$ is as described above.
s1 is 0 or 1.
$Q^{b1}$ is an alkylene group, or a group having one or more members selected from the group consisting of -O-, a silphenylene skeleton group, a divalent organopolysiloxane residue, and a dialkylsilylene group between carbon-carbon atoms in an alkylene group with two or more carbon atoms.
The number of carbon atoms in the alkylene group represented by $Q^{b1}$ is preferably from 1 to 10, particularly preferably from 2 to 6. The number of carbon atoms in the group having one or more members selected from the group consisting of -O-, a silphenylene skeleton group, a divalent organopolysiloxane residue, and a dialkylsilylene group between carbon-carbon atoms in an alkylene group having two or more carbons, is preferably from 2 to 10, particularly preferably from 2 to 6.
As $Q^{b1}$, when s1 is 0, $-CH_2OCH_2CH_2CH_2-$, $-CH_2OCH_2CH_2OCH_2CH_2CH_2-$, $-CH_2CH_2-$, $-CH_2CH_2CH_2-$, or $-CH_2OCH_2CH_2CH_2Si(CH_3)_2OSi(CH_3)_2CH_2CH_2-$ is preferred. When $(X^{32})_{s1}$ is -O-, $-CH_2CH_2CH_2-$, or $-CH_2CH_2OCH_2CH_2CH_2-$ is preferred. When $(X^{32})_{s1}$ is $-C(O)N(R^d)-$, a $C_{2-6}$ alkylene group is preferred (provided that N in the formula is bonded to $Q^{b1}$). When $Q^{b1}$ is one of these groups, it will be easy to produce the compound.
Specific examples of group (11-1) may be the following groups (11-11) to (11-14). In the following formulae, * represents the bonding position with PFPEa. Here, the linking group in group (11-1) is classified as linking group (a-2). The linking group in group (11-12) is classified as linking group (a-1), the linking group in group (11-13) is classified as linking group (a-3), and the linking group in group (11-14) is classified as linking group (a-4).

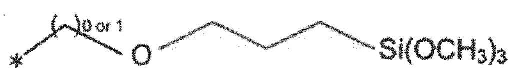

(11-11)

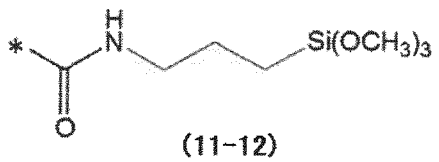

(11-12)

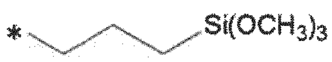

(11-13)

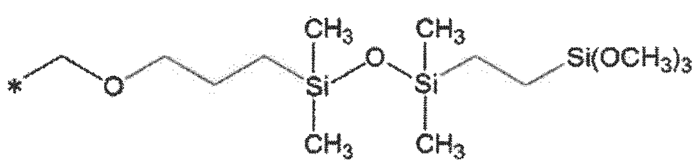

(11-14)

Group (11-2) is an example of $Z^1$ when two groups (Y1) are present, and the definitions of the respective symbols in group (11-2) are as follows.
$Q^{a2}$ is $(X^{33})_{s2}-Q^{a21}$, where $X^{33}$ is -O-, -NH-, or $-C(O)N(R^d)-$.

The definition of $R^d$ is as described above.

$Q^{a21}$ is a single bond, an alkylene group, -C(O)-, or a group having an etheric oxygen atom, -C(O)-, -C(O)O-, -OC(O)- or -NH-, between carbon-carbon atoms in an alkylene group with two or more carbon atoms.

The number of carbon atoms in the alkylene group represented by $Q^{a21}$ is preferably from 1 to 10, particularly preferably from 1 to 6.

The number of carbon atoms in the group having an etheric oxygen atom, -C(O)-, -C(O)O-, -OC(O)- or -NH- between carbon-carbon atoms in an alkylene group with two or more carbon atoms represented by $Q^{a21}$, is preferably from 2 to 10, particularly preferably from 2 to 6.

As $Q^{a21}$, from the viewpoint of ease for producing the compound, $-CH_2-$, $-CH_2CH_2-$, $-CH_2CH_2CH_2-$, $-CH_2OCH_2CH_2-$, $-CH_2NHCH_2CH_2-$, $-CH_2CH_2OC(O)CH_2CH_2-$, or -C(O)- is preferred (provided that the right side is bonded to N.).

s2 is 0 or 1 (it is 0 when $Q^{a21}$ is a single bond). 0 is preferred from the viewpoint of ease for producing the compound.

$Q^{b2}$ is an alkylene group, or a group having a divalent organopolysiloxane residue, an etheric oxygen atom or -NH-, between carbon-carbon atoms in an alkylene group with two or more carbon atoms.

The number of carbon atoms in the alkylene group represented by $Q^{b2}$ is preferably from 1 to 10, particularly preferably from 2 to 6.

The number of carbon atoms in the group having a divalent organopolysiloxane residue, an etheric oxygen atom or -NH-, between carbon-carbon atoms in an alkylene group with two or more carbon atoms represented by $Q^{b2}$, is preferably from 2 to 10, particularly preferably from 2 to 6.

As $Q^{b2}$, $-CH_2CH_2CH_2-$ or $-CH_2CH_2OCH_2CH_2CH_2-$ is preferred from the viewpoint of ease for producing the compound (provided that the right side is bonded to Si.).

The two $[-Q^{b2}-Si(R^1)_{n1}L^1_{3-n1}]$ may be the same or different.

Specific examples of group (11-2) may be the following groups (11-21) to (11-24). In the following formulae, * represents the bonding position with PFPEa. Here, the linking group in group (11-21) is classified as linking group (a-3). The linking group in group (11-22) and group (11-23) is classified as linking group (a-2), and the linking group in group (11-24) is classified as linking group (a-1).

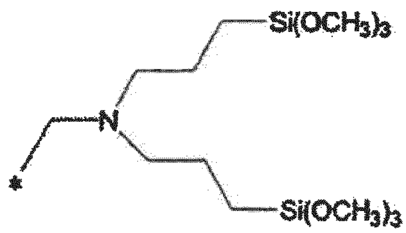
(11-21)

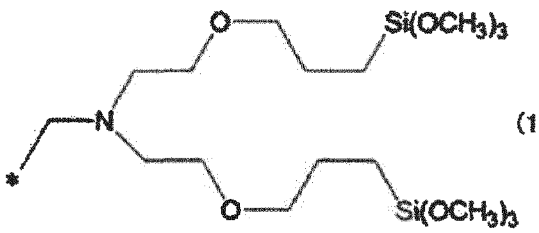
(11-22)

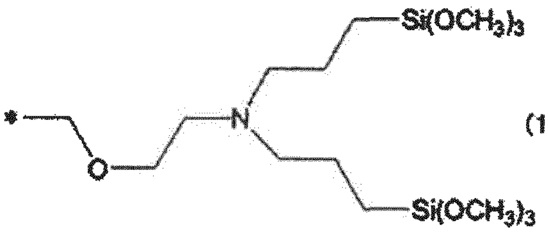
(11-23)

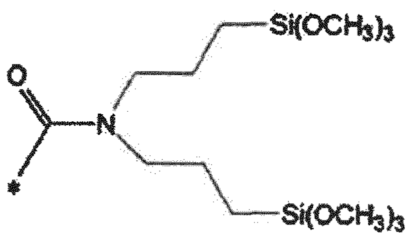
(11-24)

Group (11-3) is an example of $Z^1$ different from group (11-2) when two groups (Y1) are present, and the definitions of the respective symbols in group (11-3) are as follows.

$Q^{a3}$ is a single bond, an alkylene group, or a group having an etheric oxygen atom between carbon-carbon atoms in an alkylene group with two or more carbon atoms, and a single bond is preferred from the viewpoint of ease for producing the compound.

The number of carbon atoms in the alkylene group represented by $Q^{a3}$ is preferably from 1 to 10, particularly preferably from 2 to 6.

The number of carbon atoms in the group having an etheric oxygen atom between carbon-carbon atoms in an alkylene group with two or more carbon atoms represented by $Q^{a3}$, is preferably from 2 to 10, particularly preferably from 2 to 6.

$X^{34}$ is a carbon atom or a silicon atom.

$R^g$ is a hydroxy group or an alkyl group. The number of carbon atoms in the alkyl group represented by $R^g$ is preferably from 1 to 4.

As $X^{34}(R^g)$, C(OH) and $Si(R^{ga})$ (where $R^{9a}$ is an alkyl group; a $C_{1-10}$ alkyl group is preferred, and a methyl group is particularly preferred), are preferred.

$Q^{b3}$ is an alkylene group, or a group having an etheric oxygen atom or a divalent organopolysiloxane residue between carbon-carbon atoms in an alkylene group with two or more carbon atoms.

The number of carbon atoms in the alkylene group represented by $Q^{b3}$ is preferably from 1 to 10, particularly preferably from 2 to 6.

The number of carbon atoms in the group having an etheric oxygen atom or a divalent organopolysiloxane residue between carbon-carbon atoms in an alkylene group with two or more carbon atoms represented by $Q^{b3}$, is preferably from 2 to 10, particularly preferably from 2 to 6.

As $Q^{b3}$, $-CH_2CH_2-$, $-CH_2CH_2CH_2-$, or $-CH_2CH_2CH_2CH_2CH_2CH_2CH_2CH_2-$ is preferred from the viewpoint of ease for producing the compound.

The two $[-Q^{b3}-Si(R^1)_{n1}L^1_{3-n1}]$ may be the same or different.

Specific examples of group (11-3) may be the following groups (11-31) to (11-33). In the following formulae, * represents the bonding position with PFPEa. Here, the linking groups in groups (11-31) to (11-33) are all classified as linking group (a-3).

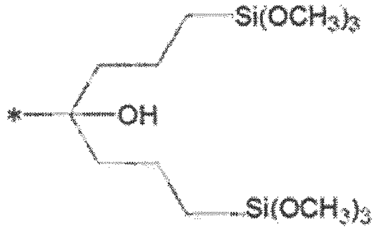

(11-31)

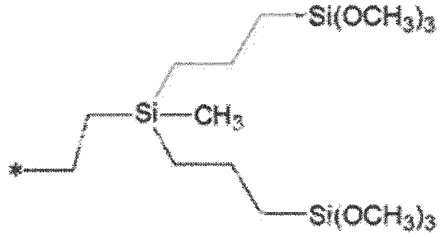

(11-32)

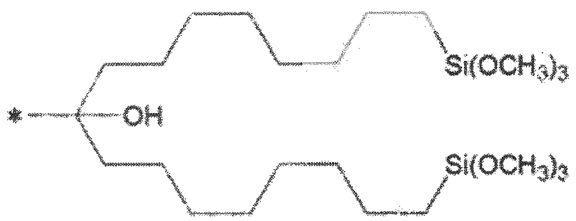

(11-33)

Group (11-4) is an example of $Z^1$ when three groups (Y1) are present, and the definitions of the respective symbols in group (11-4) are as follows.

$Q^{a4}$ is $-[C(O)N(R^d)]_{s4}-Q^{a41}-(O)_{t4}$.

The definition of $R^d$ is as described above.

s4 is 0 or 1.

$Q^{a41}$ is a single bond, an alkylene group, or a group having an etheric oxygen atom between carbon-carbon atoms in an alkylene group with two or more carbon atoms.

The number of carbon atoms in the alkylene group represented by $Q^{a41}$ is preferably from 1 to 10, particularly preferably from 1 to 6.

The number of carbon atoms in the group having an etheric oxygen atom between carbon-carbon atoms in an alkylene group with two or more carbon atoms represented by $Q^{a41}$, is preferably from 2 to 10, particularly preferably from 2 to 6.

t4 is 0 or 1 (it is 0 when $Q^{a41}$ is a single bond).

As $-Q^{a41}-(O)_{t4}-$, from the viewpoint of ease for producing the compound, when s4 is 0, a single bond, $-CH_2O-$, $-CH_2OCH_2-$, $-CH_2OCH_2CH_2O-$, $-CH_2OCH_2CH_2OCH_2-$, or $-CH_2OCH_2CH_2CH_2CH_2OCH_2-$, is preferred (provided that the left side is bonded to PFPEa), and when s4 is 1, a single bond, $-CH_2-$, or $-CH_2CH_2-$, is preferred.

$Q^{b4}$ is $-(O)_{u4}-Q^{b41}$.

$Q^{b41}$ is an alkylene group, or a group having -O-, $-C(O)N(R^d)-$ (the definition of $R^d$ is as described above), a silphenylene skeleton group, a divalent organopolysiloxane residue or a dialkylsilylene group, between carbon-carbon atoms in an alkylene group with two or more carbon atoms, or a group having an alkylene group, and $-C(O)N(R^d)-$, a dialkylsilylene group or a divalent organopolysiloxane residue, bonded to the $(O)_{u4}$ side terminal of the alkylene group.

The number of carbon atoms in the alkylene group represented by $Q^{b41}$ is preferably from 1 to 10, particularly preferably from 2 to 6. The number of carbon atoms in the group having -O-, -C(O)N($R^d$)- (the definition of $R^d$ is as described above), a silphenylene skeleton group, a divalent organopolysiloxane residue or a dialkylsilylene group, between carbon-carbon atoms in an alkylene group with two or more carbon atoms, or the group having an alkylene group, and -C(O)N($R^d$)-, a dialkylsilylene group or a divalent organopolysiloxane residue, bonded to the $(O)_{u4}$ side terminal of the alkylene group, is preferably from 2 to 10, particularly preferably from 2 to 6.

u4 is 0 or 1.

As -$Q^{b4}$-, from the viewpoint of ease for producing the compound, $-CH_2CH_2-$, $-CH_2CH_2CH_2-$, $-CH_2OCH_2CH_2CH_2-$, $-CH_2OCH_2CH_2CH_2CH_2CH_2-$, $-OCH_2CH_2CH_2-$, $-OSi(CH_3)_2CH_2CH_2CH_2-$, $-OSi(CH_3)_2OSi(CH_3)_2CH_2CH_2CH_2-$ or $-CH_2CH_2CH_2Si(CH_3)_2PhSi(CH_3)_2CH_2CH_2-$, is preferred (provided that the right side is bonded to Si.).

The three [-$Q^{b4}$-$Si(R^1)_{n1}L^1_{3-n1}$] may be the same or different.

Specific examples of group (11-4) may be the following groups (11-41) to (11-44). In the following formulae, * represents the bonding position with PFPEa. The linking group in groups (11-41) to (11-43) is classified as linking group (a-2), and the linking group in group (11-44) is classified as linking group (a-1).

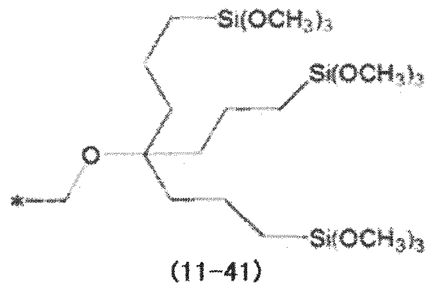

(11-41)

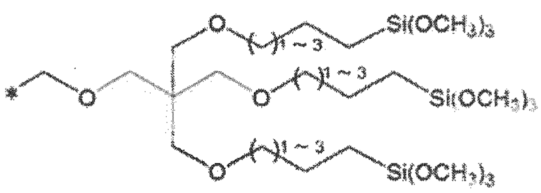

(11-42)

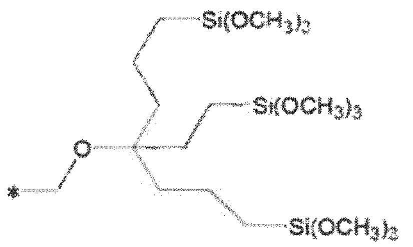

(11-43)

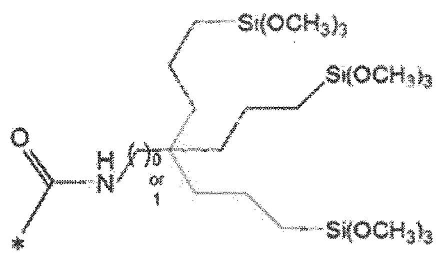

(11-44)

Group (11-5) is an example of $Z^1$ different from group (11-4) when three groups (Y1) are present, and the definitions of the respective symbols in group (11-5) are as follows.

$Q^{a5}$ is an alkylene group or a group having an etheric oxygen atom between carbon-carbon atoms in an alkylene group with two or more carbon atoms.

The number of carbon atoms in the alkylene group represented by $Q^{a5}$ is preferably from 1 to 10, particularly preferably from 2 to 6.

The number of carbon atoms in the group having an etheric oxygen atom between carbon-carbon atoms in an alkylene group with two or more carbon atoms represented by $Q^{a5}$, is preferably from 2 to 10, particularly preferably from 2 to 6.

As $Q^{a5}$, from the viewpoint of ease for producing the compound, $-CH_2OCH_2CH_2CH_2-$, $-CH_2OCH_2CH_2OCH_2CH_2CH_2-$, $-CH_2CH_2-$ or $-CH_2CH_2CH_2-$is preferred (provided that the right side is bonded to Si).

$Q^{b5}$ is an alkylene group, or a group having an etheric oxygen atom or a divalent organopolysiloxane residue between carbon-carbon atoms in an alkylene group with two or more carbon atoms.

The number of carbon atoms in the alkylene group represented by $Q^{b5}$ is preferably from 1 to 10, particularly preferably from 2 to 6.

The number of carbon atoms in the group having an etheric oxygen atom or a divalent organopolysiloxane residue between carbon-carbon atoms in an alkylene group with two or more carbon atoms represented by $Q^{b5}$ is preferably from 2 to 10, particularly preferably from 2 to 6.

As $Q^{b5}$, from the viewpoint of ease for producing the compound, $-CH_2CH_2CH_2-$ or $-CH_2CH_2OCH_2CH_2CH_2-$ is preferred (provided that the right side is bonded to $Si(R^1)_niL^1_{3-n1}$).

The three [$-Q^{b5}-Si(R^1)_{n1}L^1_{3-n1}$] may be the same or different.

Specific examples of group (11-5) may be the following groups (11-51) to (11-52). In the following formulae, * represents the bonding position with PFPEa. The linking group in group (11-51) is classified as linking group (a-2). The linking group in group (11-52) is classified as linking group (a-3).

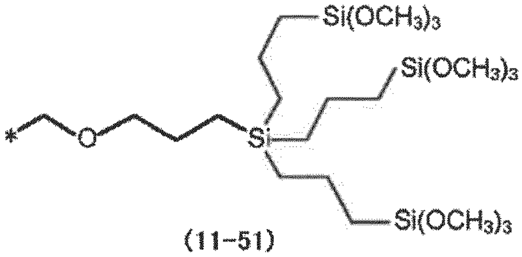
(11-51)

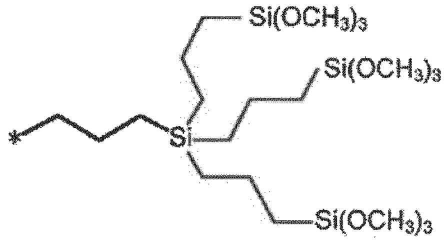
(11-52)

Group (11-6) is an example of $Z^1$ when w groups (Y1) are present, and the definitions of the respective symbols in group (11-6) are as follows. The linking group in group (11-6) contains an organopolysiloxane residue as shown below. Therefore, the linking group in group (11-6) is classified as linking group (a-4).

$Q^{a6}$ is $-[C(O)N(R^d)]_v-Q^{a61}$.

The definition of $R^d$ is as described above.

v is 0 or 1.

$Q^{a61}$ is an alkylene group or a group having an etheric oxygen atom between carbon-carbon atoms in an alkylene group with two or more carbon atoms.

The number of carbon atoms in the alkylene group represented by $Q^{a61}$ is preferably from 1 to 10, particularly preferably from 2 to 6.

The number of carbon atoms in the group having an etheric oxygen atom between carbon-carbon atoms in an alkylene group with two or more carbon atoms represented by $Q^{a61}$ is preferably form 2 to 10, particularly preferably from 2 to 6.

As $Q^{a61}$, from the viewpoint of ease for producing the compound, $-CH_2OCH_2CH_2CH_2-$, $-CH_2OCH_2CH_2OCH_2CH_2CH_2-$, $-CH_2CH_2-$ or $-CH_2CH_2CH_2-$is preferred (provided that the right side is bonded to $X^{35}$).

$X^{35}$ is a (w+1)-valent organopolysiloxane residue.

w is an integer of from 2 to 7.

As the (w+1)-valent organopolysiloxane residue, the following groups may be mentioned. $R^a$ in the following formulae is as described above.

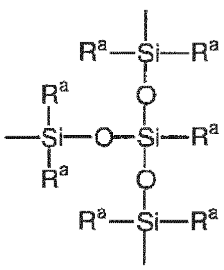

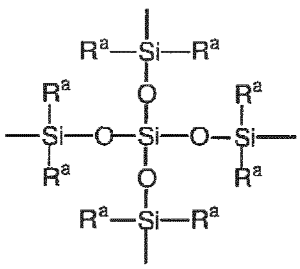

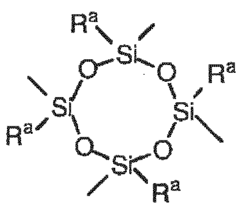

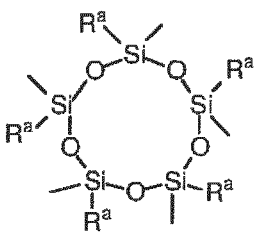

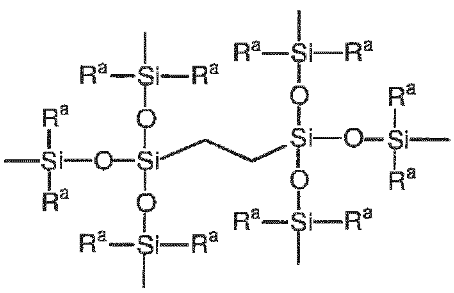

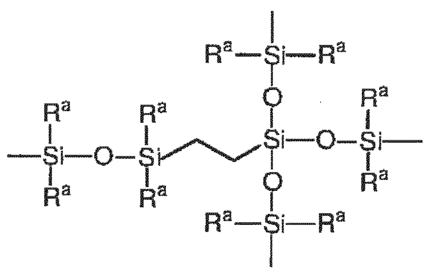

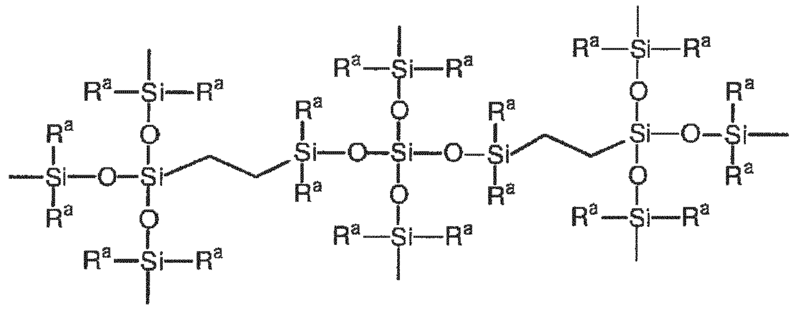

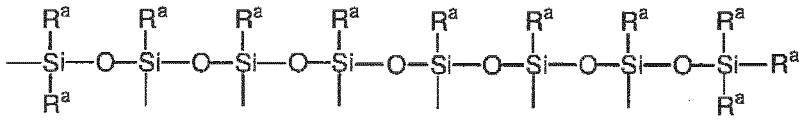

$Q^{b6}$ is an alkylene group, or a group having an etheric oxygen atom or a divalent organopolysiloxane residue between carbon-carbon atoms in an alkylene group with two or more carbon atoms.

The number of carbon atoms in the alkylene group represented by $Q^{b6}$ is preferably from 1 to 10, particularly preferably from 2 to 6.

The number of carbon atoms in the group having an etheric oxygen atom or a divalent organopolysiloxane residue between carbon-carbon atoms in an alkylene group with two or more carbon atoms represented by $Q^{b6}$ is preferably from 2 to 10, particularly preferably from 2 to 6.

As $Q^{b6}$, from the viewpoint of ease for producing the compound, $-CH_2CH_2-$ or $-CH_2CH_2CH_2-$ is preferred.

The w $[-Q^{b6}-Si(R^1)_{n1}L^1_{3-n1}]$ may be the same or different.

As the compound (1), a compound represented by the formula (1-2) is also preferred, since the water and oil repellency of the antifouling layer will be superior.

$$[A^1\text{-PFPEa-}Q^a\text{-}]_{j32}Z^{32}[-Q^b\text{-}Si(R^1)_{n1}L^1_{3-n1}]_{h32} \qquad (1\text{-}2)$$

In the formula (1-2), the definitions of $A^1$, $X^1$, m1, $Q^a$, $Q^b$, $R^1$, $L^1$ and n1 are the same as the definitions of the respective groups in the formula (1) and the formula (11).

$Z^{32}$ is a (j32+h32)-valent hydrocarbon group, or a (j32+h32)-valent hydrocarbon group with two or more carbon atoms having at least one etheric oxygen atom between carbon-carbon atoms in the hydrocarbon group.

As $Z^{32}$, the residue having the hydroxyl group removed from a polyhydric alcohol having a primary hydroxy group, is preferred.

As $Z^{32}$, from the viewpoint for ease for obtaining the raw materials, groups (Z-1) to (Z-5) are preferred. However, $R^{34}$ is an alkyl group, preferably a methyl group or an ethyl group.

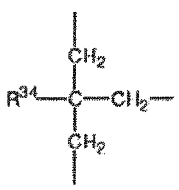

(Z-1)

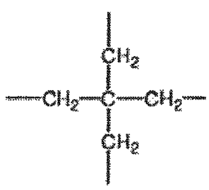

(Z-2)

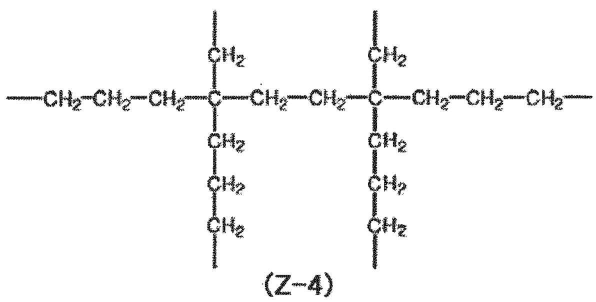

(Z-4)

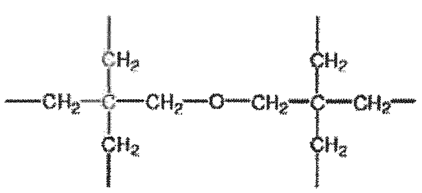

(Z-3)

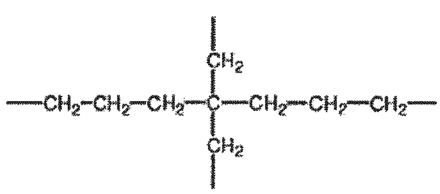

(Z-5)

j32 is an integer of at least 2, and from 2 to 5 is preferred from such a viewpoint that the water and oil repellency of the surface layer will be superior.

h32 is an integer of at least 1, and from 2 to 4 is preferred, and 2 or 3 is more preferred from such a viewpoint that the friction resistance of the antifouling layer will be superior.

In the compound (1-2), for example, when $Q^a$ and $Q^b$ are both single bonds, groups (Z-1) to (Z-5) correspond to the linking group (a). Group (Z-3) is classified as linking group (a-2), and the rest are classified as linking group (a-3).

As the compound (A), the more the linking groups (a) and the points to be bonded to the base material exist at one terminal of the poly(oxyfluoroalkylene) chain (a), the better the adhesion, and therefore, a compound having two or more groups (Y) connected via the linking group (a-1) is particularly preferred. In this case, the number of groups (Y) is preferably from 2 to 10, more preferably from 2 to 5, particularly preferably 2 or 3, as mentioned above.

As a specific example of such compound (A), a compound may be mentioned wherein in the compound (1), $A^1$ is a perfluoroalkyl group, $Z^1[-Si(R^1)_{n1}L^1{}_{3-n1}]_{g1}$ is selected from group (11-2), group (11-4) and group (11-6), and $Z^1$ being a linking group (a), is classified as linking group (a-1). As $Z^1[-Si(R^1)_{n1}L1_{3-n1}]_{g1}$, more specifically group (11-24), group (11-44) or the like may be mentioned. Further, a compound may be mentioned wherein in the compound (1-2), $A^1$ is a perfluoroalkyl group, and $Q^b$ is $-C(O)N(R^d)-$(where $R^d$ is as described above).

The number average molecular weight (Mn) of compound (A) is preferably from 500 to 20,000, more preferably from 800 to 10,000, particularly preferably from 1,000 to 8,000, from the viewpoint of the friction resistance of the antifouling layer.

The number average molecular weight (Mn) of the compound (A) is a value obtained by the following method by using a NMR analysis method. That is, the repeating units of PFPEa are identified by 19F-NMR (solvent: $CDCl_3$, internal standard: $CFCl_3$), and at the same time, the number of repeating units is calculated, and the average value of the molecular weight of PFPEa per molecule is calculated. Next, identification and quantification of the terminal groups are conducted by 1H-NMR (solvent: $CDCl_3$, internal standard: TMS), and based on the number of moles of terminal groups, the number average molecular weight (Mn) of the compound (A) is calculated. Hereinafter, the number average molecular weight may be simply indicated by "Mn".

Specific examples of the compound (A) may, for example, be those described in the following documents.

Fluorinated modified hydrogen-containing polymer as described in Japanese Patent No. 4138936.

Compounds described in U.S. Patent Application Publication No. 2010/0129672.

Organosilicon compounds as described in WO2011/060047.

Organosilicon compounds as described in WO2011/059430.

Fluorinated organosilane compounds as described in WO2012/064649.

Fluorooxyalkylene group-containing polymers as described in JP-A-2012-72272.

Fluorinated ether compounds as described in WO2013/042732.

Fluorinated ether compounds as described in WO2013/121984.

Fluorinated ether compounds as described in WO2013/121985.

Fluorinated ether compounds as described in WO2013/121986.

Compounds described in WO2014/126064.

Fluorinated ether compounds as described in WO2014/163004.

Fluorinated ether compounds as described in JP-A-2014-080473.

Perfluoro(poly)ether-containing silane compounds as described in JP-A-2014-218639.

Fluorinated ether compounds as described in WO2015/087902.

Fluoropolyether group-containing polymer-modified silanes as described in JP-A-2015-199906.

Fluoropolyether group-containing polymer-modified silanes as described in JP-A-2016-204656.

Fluoropolyether group-containing polymer-modified silanes as described in JP-A-2016-210854.

Fluoropolyether group-containing polymer-modified silanes as described in JP-A-2016-222859.

Fluorinated ether compounds as described in WO2017/038830.

Fluorinated ether compounds as described in WO2017/038832.

Fluorinated ether compounds as described in WO2017/187775.

Fluorinated ether compounds as described in WO2018/143433.

Commercial products of the compound (A) may be KY-100 series (KY-178, KY-185, X-71-195, KY-1900, etc.) manufactured by Shin-Etsu Chemical Co., Ltd., and OPTOOL (registered trademark) UD509 manufactured by DAIKIN INDUSTRIES, LTD. Further, at the time of forming the antifouling layer 2, one or more types of compound (A) may be used.

The method for forming the antifouling layer 2 by using the compound (A) can be either a wet coating method or a dry coating method. As the wet coating method, a method may, for example, be mentioned wherein a liquid composition containing the compound (A) (hereinafter referred to as liquid composition (X2)) is applied onto the main surface 3s of the antiglare layer 3 by a spin coating method, a dip coating method, a casting method, a slit coating method, a spray coating method, or the like, and then dried. After drying, post-treatment such as heating, humidification, light irradiation, washing, etc. may be conducted as the case requires.

As the dry coating method, a method may, for example, be mentioned wherein a composition for vapor deposition containing compound (A) is vapor-phase deposited on the main surface 3s of the antiglare layer 3. The composition for vapor deposition may, for example, be a composition comprising components having a liquid medium excluded from the liquid composition (X2). The vapor phase deposition may be a physical vapor deposition method (vacuum evaporation, ion plating, or sputtering), a chemical vapor deposition method (thermal CVD, plasma CVD, or optical CVD), an ion beam sputtering method, or the like. In order to obtain an antifouling layer 2 with high adhesion, it is preferred to form the film by the dry coating method.

The vacuum evaporation method is particularly preferred from such a viewpoint that it is thereby possible to suppress decomposition of the compound (A) and from the viewpoint of the simplicity of the equipment. At the time of vacuum evaporation, a pellet-like material in which a metal porous body such as iron, steel, etc. is impregnated with the composition for vapor deposition, may be used. A pellet-like material prepared by impregnating the porous metal such as iron, steel, etc. with the liquid composition (X2) and drying the liquid medium, may be used. After the vapor deposition, post-treatment such as heating, humidification, light irradiation, washing, etc. may be conducted as the case requires, as described above.

As described above, from the viewpoint of further improving the antifouling properties, especially the removability of a creamy product such as hand cream, it is preferred that the fluorine content surplus of the antifouling layer calculated by the above method is from 10 to 150, more preferably from 20 to 100. The fluorine content surplus of the antifouling layer can be adjusted to the above range by adjusting the film-forming conditions at the time of forming the antifouling layer, such as the drying conditions in the wet coating method, the deposition conditions in the dry coating method, and the post-treatment conditions such as heating, humidification, light irradiation, and washing in both methods.

The liquid composition (X2) contains at least the compound (A) and a liquid medium. The liquid composition (X2) may contain a film-forming component other than the compound (A) to such an extent that the effects of the invention are not impaired. The film-forming component is a component that reacts or remains intact to become a constituent material of the antifouling layer 2. The film-forming component other than the compound (A) may be a compound having a poly(oxyfluoroalkylene) chain other than the poly(oxyfluoroalkylene) chain (a), and a reactive silyl group, or a fluorinated or fluorine-free reactive silane compound, which the above-mentioned silica precursor contains.

The proportion of the compound (A) in the film-forming component is preferably from 50 to 100 mass%, more preferably from 90 to 100 mass%, further preferably from 99 to 100 mass%, particularly preferably from 99.5 to 100 mass%, to the total amount of the film-forming component.

As the reactive silane compound including the compound (A) in the film-forming component, the reactive silane compound itself may be contained, or if the reactive silyl group of the reactive silane compound has a hydrolyzable group, it may be contained in such a state the hydrolyzable group is partially hydrolyzed, or if the reactive silyl group has a silanol group, it may be contained in such a state that the silanol group, or a silanol group formed by the above hydrolysis, is partially (co)condensed.

The liquid composition (X2) may further contain, in addition to the film-forming component including the compound (A) and the liquid medium, known additives such as a surfactant, an acid catalyst or a basic catalyst that promotes the hydrolysis and condensation reaction of the reactive silyl group possessed by the compound (A), etc., to such an extent that the effects of the present invention are not impaired. The acid catalyst may be hydrochloric acid, nitric acid, acetic acid, sulfuric acid, phosphoric acid, sulfonic acid, methanesulfonic acid, p-toluenesulfonic acid, or the like. The basic catalyst may be sodium hydroxide, potassium hydroxide, ammonia, or the like.

The liquid composition (X2) comprises a film-forming component including the compound (A) and a liquid medium. The liquid composition (X2) needs only to be in a liquid form, and may be a solution or a dispersion.

The content of the film-forming component including the compound (A) in the liquid composition (X2) is preferably from 0.001 to 20 mass%, more preferably from 0.001 to 10 mass%, particularly preferably from 0.01 to 1 mass%, in the liquid composition (X2).

As the liquid medium, an organic solvent is preferred. The organic solvent may be a fluorinated organic solvent or a non-fluorinated organic solvent, and may contain both solvents.

The fluorinated organic solvent may be a fluorinated alkane, a fluorinated aromatic compound, a fluoroalkyl ether, a fluorinated alkylamine, a fluoroalcohol or the like.

As the fluorinated alkane, a $C_{4-8}$ compound is preferred. Commercial products may be $C_6F_{13}H$ (manufactured by AGC Inc., ASAHIKLIN (registered trademark) AC-2000), $C_6F_{13}C_2H_5$ (manufactured by AGC Inc., ASAHIKLIN (registered trademark) AC-6000), $C_2F_5CHFCHFCF_3$ (manufactured by Chemours, Vertrel (registered trademark) XF), etc.

As the fluorinated aromatic compound, hexafluorobenzene, trifluoromethylbenzene, perfluorotoluene, bis(trifluoromethyl)benzene or the like may be mentioned.

As the fluoroalkyl ether, a $C_{4-12}$ compound is preferred. Commercial products may be $CF_3CH_2OCF_2CF_2H$ (manufactured by AGC Inc., ASAHIKLIN (registered trademark) AE-3000), $C_4F_9OCH_3$ (manufactured by 3M, Novec (registered trademark) 7100), $C_4F_9OC_2H_5$ (manufactured by 3M, Novec (registered trademark) 7200), $C_2F_5CF(OCH_3)C_3F_7$ (manufactured by 3M, Novec (registered trademark) 7300), etc.

As the fluorinated alkylamine, perfluorotripropylamine, perfluorotributylamine, or the like may be mentioned.

As the fluoroalcohol, 2,2,3,3-tetrafluoropropanol, 2,2,2-trifluoroethanol, hexafluoroisopropanol, or the like may be mentioned.

As the non-fluorinated organic solvent, a compound consisting only of hydrogen atoms and carbon atoms, or a compound consisting only of hydrogen atoms, carbon atoms and oxygen atoms, is preferred, and a hydrocarbon, an alcohol, a ketone, an ether or an ester may be mentioned.

The liquid medium may be a mixed medium having two or more types mixed.

The content of the liquid medium is preferably from 80 to 99.999 mass%, more preferably from 90 to 99.999 mass%, particularly preferably from 99 to 99.999 mass%, in the liquid composition (X2).

(Antifouling layer-provided transparent substrate, of the second embodiment (not according to independent claim 1))

The antifouling layer-provided transparent substrate 10B shown in Fig. 3 comprises a transparent substrate 1 and an antifouling layer 2 provided on the transparent substrate 1. The antifouling layer 2 constitutes the top surface layer on one main surface Sa of the transparent substrate 1. The transparent substrate 1 is constructed so that the shape of the main surface Sa on the antifouling layer 2 side is reflected in the antifouling layer 2, so that the surface 2s of the antifouling layer 2 satisfies the characteristic of (2).

The antifouling layer 2 of the antifouling layer-provided transparent substrate 10B is the same as the antifouling layer 2 of the antifouling layer-provided transparent substrate 10A shown in Figs. 1 and 2. The transparent substrate 1 in the antifouling layer-provided transparent substrate 10B may be the same as the transparent substrate 1 in the antifouling layer-provided transparent substrate 10A shown in Figs. 1 and 2, except for the construction of the main surface Sa on the antifouling layer 2 side.

The shape of the main surface Sa on the antifouling layer 2 side of the transparent substrate 1 is constructed, for example, to satisfy the characteristic of (2). The values of various parameters indicating the surface shape of the main surface Sa of the transparent substrate 1, the arithmetical mean roughness Ra, the skewness Rsk, and the mean width RSm of the elements, may be made to be the same as the values on the surface of the antifouling layer as described above. G60, the antiglare index value and the glare index value on the main surface Sa of the transparent substrate 1 on the antifouling layer 2 side should preferably become to be in the above ranges described as the preferred ranges of these properties on the surface 2s of the antifouling layer 2.

The transparent substrate 1 is obtainable, for example, by processing the main surface Sa on the antifouling layer 2 side of the transparent substrate 1 in the antifouling layer-provided transparent substrate 10A shown in Fig. 1 and 2 into the above shape. The processing method of the main surface Sa to obtain the transparent substrate 1 is not particularly limited. The processing method may be appropriately selected depending on e.g. the material of the transparent substrate 1.

For example, if the transparent substrate 1 is a glass substrate, specifically a method of applying frost treatment to the untreated transparent substrate to be treated (hereinafter referred to as the "substrate to be treated"), may be mentioned. The frost treatment can be conducted, for example, by immersing the substrate to be treated, in a mixed solution of hydrogen fluoride, and ammonium fluoride, potassium fluoride, etc., and chemically surface-treating the immersed surface. The content of hydrogen fluoride in the mixed solution to be used for frost treatment is preferably from 5 to 60 mass%. In a case where only one main surface of the substrate to be treated is to be frost-treated, the main surface not to be treated may be pre-treated, for example, by applying an acid-resistant protective film, and then immersion treatment of the substrate may be conducted.

Further, other than such a chemical treatment method, it is possible to employ a physical treatment method, such as sandblasting treatment, in which crystalline silicon dioxide powder, silicon carbide powder, etc. are blown onto the main surface of the substrate to be treated, by pressurized air, or brushing with a brush having crystalline silicon dioxide powder, silicon carbide powder, etc. attached and moistened with water.

In particular, the method for applying frost treatment, in which surface treatment is chemically conducted by using a chemical solution such as hydrogen fluoride, can be preferably employed as a method of applying surface treatment to the substrate to be treated, because micro-cracks are less likely to be formed on the surface of the substrate to be treated and lowering of the mechanical strength is less likely to occur.

After creating concavo-convex on the surface of the substrate to be treated as described above, it is common to chemically etch the treated surface in order to further adjust the surface shape. In this way, the haze can be adjusted to a desired value by the etching amount, cracks caused by sandblast treatment, etc. can be removed, and glare can be suppressed.

For etching, a method of immersing the substrate to be treated in a solution containing hydrogen fluoride, is preferably used. As components other than hydrogen fluoride, hydrochloric acid, nitric acid, citric acid, etc. may be contained. By containing these, it is possible to suppress a localized precipitation reaction to be caused by the reaction between the alkali components in the glass and hydrogen fluoride, and the etching can be proceeded uniformly in plane.

The content of hydrogen fluoride in the solution to be used for etching is preferably from 5 to 60 mass%.

In the foregoing, the antifouling layer-provided transparent substrate of the present invention has been described with reference to Figs. 1 to 3, but the present invention is not limited to these embodiments, and these embodiments can be changed or modified without departing from the concept and scope of the present invention.

For example, the antifouling layer-provided transparent substrate of the present invention may have, in addition to the above-described respective constructions, additional layers such as a printing layer, a low reflection layer, a UV cut layer, and an IR cut layer.

<Applications of antifouling layer-provided transparent substrate>

Applications of the antifouling layer-provided transparent substrate of the present invention may, for example, be transparent parts for vehicles (headlight covers, side mirrors, front transparent substrates, side transparent substrates, rear transparent substrates, instrument panel surfaces, etc.), meters, architectural windows, show windows, displays (laptop computers, monitors, LCD, PDP, ELD, CRT, PDA, etc.), LCD color filters, touch panel substrates, pickup lenses, optical lenses, eyeglass lenses, camera parts, video parts, CCD cover substrates, optical fiber end faces, projector parts, copier parts, transparent substrates for solar cells (cover glass, etc.), cell phone windows, backlight unit parts (light guide plates, cold cathode tubes, etc.), LCD brightness enhancement films (prisms, semi-transparent films, etc.), organic EL light emitting device parts, inorganic EL light emitting device parts, phosphor light emitting device parts, optical filters, end surface of optical parts, lighting lamps, lighting equipment covers, amplified laser light sources, anti-reflection films, polarizing films, agricultural films, etc.

The applications of the antifouling layer-provided transparent substrate of the present invention are preferably interior articles of transportation equipment, more preferably in-vehicle articles, from the viewpoint of being excellent in antiglare and antifouling properties, especially in removability of a creamy product such as hand cream. The in-vehicle articles are preferably in-vehicle systems equipped with display devices, such as car navigation systems, instrument panels, head-up displays, dashboards, center consoles, and shift knobs, and are particularly preferred for use in instrument panels.

EXAMPLES

Hereinafter, the present invention will be described in detail with reference to Examples. However, the present invention is not limited by the following Examples. Among Ex. 1 to 9, Ex. 1 to 6 are Examples of the present invention, and Ex. 7 to 9 are Comparative Examples.

[Preparation of the liquid composition for forming antiglare layer]

The liquid composition for forming antiglare layer, used in each Ex., was prepared by using the following materials.

(Silica precursors)

As silica precursors, tetraethoxysilane and propyltrimethoxysilane (both manufactured by Shin-Etsu Silicone) were used.

(Dispersion of scaly particles)

As the dispersion of scaly particles, SLV dispersion (dispersion of scaly silica particles made by crushing SUNLOVELY LFS HN150 and dispersing it in water, manufactured by AGC Si-Tech Co., Ltd) was used. Average particle size of scaly silica particles in SLV dispersion: 175 nm, average aspect ratio (average particle size/average thickness): 80, and concentration of scaly silica particles: 5 mass%.

(Liquid media)

As liquid media, SOLMIX (registered trademark) AP-11 (manufactured by Japan Alcohol Trading CO., LTD.; a mixed solvent of 85 mass% ethanol, 10 mass% isopropyl alcohol, and 5 mass% methanol, hereinafter referred to as "AP-11"), diacetone alcohol and propylene glycol were used.

(Preparation of the liquid composition for forming antiglare layer)

While stirring by using a magnetic stirrer, 107.9 g of tetraethoxysilane, 18.16 g of propyltrimethoxysilane and 78.74 g of SLV dispersion were added to AP-11 and mixed at 25°C for 30 minutes to obtain a mixed liquid. To the obtained mixed liquid, a nitric acid aqueous solution with a concentration of 60 mass% was dropwise added in an amount of 0.54 mass% to the amount of the mixed liquid, and further mixed at 60°C for 60 minutes to obtain a precursor liquid of a liquid composition for forming antiglare film, in which the total $SiO_2$ converted solid content concentration of tetraethoxysilane, propyltrimethoxysilane and scaly silica particles, was 4.0 mass%. 15.0 g of the obtained precursor liquid was diluted with a mixed liquid having 84.52 g of AP-11, 0.30 g of diacetone alcohol and 0.18 g of propylene glycol mixed to obtain a liquid composition for forming antiglare film, having a $SiO_2$ converted solid content concentration of 0.60 mass%.

[Preparation of the composition for forming antifouling layer]

As the composition for forming antifouling layer, commercial products X-71-195, KY-178 (all manufactured by Shin-Etsu Chemical Co., Ltd.), OPTOOL (registered trademark) UD509 (manufactured by DAIKIN INDUSTRIES, LTD., hereinafter referred to as "UD509") were used. Each of these commercial products is a solution containing, as compound (A), a compound having a poly(oxyfluoroalkylene) chain (a) (PFPEa) consisting only of the group (F), in a proportion of 20 mass%. In X-71-195 and KY-178, the w/v ratio was 54/46, and in UD509, it was 55/45.

Further, as the composition for forming antifouling layer for a Comparative Example, OPTOOL (registered trademark) DSX (manufactured by DAIKIN INDUSTRIES, LTD., hereinafter referred to as "DSX"), which is a solution containing a compound having a poly(oxyfluoroalkylene) chain having no group (F) and reactive silyl groups, in a proportion of 20 mass%, was used. Here, the poly(oxyfluoroalkylene) chain of the compound contained in DSX is $(OCF_2CF_2CF_2)_{x3}(OCF_2CF_2)$ (x3 is an integer of at least 1; hereinafter referred to as "PFPEb").

Further, compound (Cf) produced by the following method was mixed in a proportion of 20 mass% to $C_4F_9OC_2H_5$ (Novec-7200: product name, manufactured by 3M) as a liquid medium to prepare a composition for forming antifouling layer for a Comparative Example (hereinafter referred to as "composition (Cf)").

(Production of compound (Cf))

Compound (Cf) was obtained in accordance with the method described in Example 6 of WO2013/121984. The poly(oxyfluoroalkylene) chain possessed by compound (Cf) will be hereinafter referred to as "PFPEc".

$$CF_3\text{-}(OCF_2CF_2OCF_2CF_2CF_2CF_2)_{x4}OCF_2CF_2OCF_2CF_2CF_2\text{-}C(O)NHCH_2CH_2CH_2\text{-}Si(OCH_3)_3 \quad (Cf)$$

Average value of the number of units x4: 7, Mn: 2,900.

[Ex. 1]

The liquid composition for forming antiglare layer obtained above was applied to a glass substrate (soda-lime glass formed by the float process, thickness; 1.1 mm) after cleaning and drying, by an electrostatic coating device (liquid electrostatic coater, manufactured by ASAHI SUNAC CORPORATION) to form a coating film. As the electrostatic coating gun of the electrostatic coating device, a rotary atomizing electrostatic automatic gun (manufactured by ASAHI SUNAC CORPORATION, Sunbell, ESA120, cup diameter 70 mm) was used.

The temperature in the coating booth of the electrostatic coating device was adjusted to within 25±1.5°C and the humidity to within 50±10%. A cleaned glass substrate, which had been heated to 25±1°C in advance, was placed on the chain conveyor of the electrostatic coating device via a stainless steel plate. While conveyed at a constant speed by the chain conveyor, the liquid composition for forming antiglare layer was applied to the top surface of the glass substrate at a temperature within the range of 25±1°C by the electrostatic coating method, and then baked at 300°C for 60 minutes in air to form an antiglare layer thereby to obtain antiglare layer-provided substrate 1.

In the production of the antiglare layer-provided substrate 1, the speed of the chain conveyor, the distance between the glass substrate and the electrostatic coating gun, and the amount of the liquid composition for forming antiglare layer applied were adjusted in advance so that the parameters of the surface shape of the antifouling layer of the antifouling layer-provided transparent substrate 1 finally obtained would be the values shown in Table 1. An antifouling layer was formed on the antiglare layer of the obtained antiglare layer-provided substrate 1 as follows.

The antiglare layer-provided substrate 1 was placed in the vacuum deposition apparatus, and the inside of the vacuum deposition apparatus was evacuated until the pressure became at most $5\times10^{-3}$ Pa. At a distance of 1,000 mm

facing the surface of the antiglare layer of the antiglare layer-provided substrate 1, the vapor deposition container containing 0.3 g of X-71-195 was heated to 300°C by resistance heating, and the solid content in X-71-195 was vacuum deposited to form an antifouling layer. Here, the temperature of X-71-195 was 300°C. The obtained antifouling layer-provided transparent substrate was then heated at a temperature of 140°C for 30 minutes (post-treatment) to obtain antifouling layer-provided transparent substrate 1.

[Ex. 2 to 4]

In Ex. 1, the amount of X-71-195 to be contained in the vapor deposition container at the time of forming the antifouling layer was changed to the amount shown in Table 1, otherwise in the same manner, antifouling layer-provided transparent substrates 2 to 4 in Ex. 2 to 4 were obtained.

[Ex. 5 and 6]

In Ex. 1, X-71-195 to be contained in the vapor deposition container at the time of forming the antifouling layer was changed to KY-178 or UD509, and the amount of such a composition to be contained in the vapor deposition container was set to be the amount shown in Table 1, otherwise in the same manner, antifouling layer-provided transparent substrate 5 or antifouling layer-provided transparent substrate 6 in Ex. 5 or 6 was obtained.

[Ex. 7 and 8]

In Ex. 1, X-71-195 to be contained in the vapor deposition container at the time of forming the antifouling layer, was changed to DSX or composition Cf and the amount of such a composition to be contained in the vapor deposition container was set to be the amount shown in Table 1, otherwise in the same manner, antifouling layer-provided transparent substrate 7 or antifouling layer-provided transparent substrate 8 in Ex. 7 or 8 was obtained.

[Ex. 9]

In Ex. 1, at the time of producing antiglare layer-provided substrate 1, the speed of the chain conveyor, the distance between the glass substrate and the electrostatic coating gun, and the amount of the liquid composition for forming antiglare layer applied were adjusted in advance, so that the parameters of the surface shape of the antifouling layer of the antifouling layer-provided transparent substrate 9 to be finally obtained would be the values shown in Table 1, otherwise in the same manner, antiglare layer-provided substrate 2 was produced. An antifouling layer was formed on the antiglare layer of the obtained antiglare layer-provided substrate 2 in the same manner as in Ex. 1 to obtain antifouling layer-provided transparent substrate 9, except that the amount of X-71-195 to be contained in the vapor deposition container was changed to the amount shown in Table 1.

The following evaluations were conducted with respect to the antifouling layer-provided transparent substrates 1 to 9 obtained in this manner. The results are shown in Table 1, along with the construction of the antifouling layer-provided transparent substrate, including the material properties of the antifouling layer.

(Surface characteristics, fluorine content surplus)

With respect to the surface of the antifouling layer on the antifouling layer-provided transparent substrate, the arithmetical mean roughness Ra, the mean width RSm of the elements, and the skewness Rsk ("Ra", "RSm" and "Rsk" in Table 1) were, respectively, measured by the above-described methods. At the same time, judgement was made as to whether the above formula (I) was satisfied. In Table 1, "O" is used to indicate cases in which the formula (I) is satisfied, and "×" is used to indicate cases in which the formula (I) is not satisfied. Further, the fluorine content surplus of the antifouling layer in the antifouling layer-provided transparent substrate was calculated by the method as described above.

(Haze)

The haze (%) of the antifouling layer-provided transparent substrate was measured by using a haze meter (Model HR-100 manufactured by MURAKAMI COLOR RESEARCH LABORATORY) in accordance with the method specified in JIS K7136:2000.

(Removability of creamy product (hereinafter "cream"))

With respect to the antifouling layer-provided transparent substrate, the following cream wiping test was conducted, and the evaluation was made by using the difference in G60 on the surface of the antifouling layer of the antifouling layer-provided transparent substrate before and after the test.

<Cream wiping test>

As cream, 0.05 g of NIVEA cream manufactured by Kao Corporation, was placed on a clean glass substrate. Next, a silicon plug with a bottom surface of 15 mm in diameter and having a load of 1 kg mounted thereon was placed thereon, whereby the cream was transferred to the silicon plug. Then, the silicon plug having a load of 1 kg mounted and having the cream transferred, was placed on a paper towel for 80 seconds to remove the excess cream. Then, by placing the silicon plug having a load of 1 kg mounted, on the surface of the antifouling layer of the antifouling layer-provided transparent substrate, the cream was transferred to the surface of the above antifouling layer, to obtain an evaluation sample.

A wiping cloth (Toraysee MK MK24H-CPMK, manufactured by Toray Industries, Inc.) cut into strips with a base area of 20 mm × 20 mm and having a load of 100 g mounted, was placed on the cream of the evaluation sample, and the wiping operation of moving the cloth was repeated 30 times.

<Evaluation>

G60 of the surface of the antifouling layer after the cream wiping test is identified by $G60_{after}$, and G60 of the surface of the antifouling layer before the cream wiping test is identified by $G60_{before}$, and the value ΔG60 obtained by subtracting $G60_{after}$ from $G60_{before}$ was used for evaluation. The method of measuring G60 is as described above. According to the evaluation, the smaller ΔG60 is, the higher the removability of the creamy product. Table 1 shows the results of judgment made by the following evaluation standards by using $G60_{before}$ and ΔG60.

<Evaluation standards>

| | |
|---|---|
| ◎ : | ΔG60<4 |
| ○ : | 4≦ΔG60<6 |
| Δ : | 6≦ΔG60<8 |
| × : | 8≦ΔG60 |

[Table 1]

| Ex. | Construction, etc. of antifouling layer-provided transparent substrate | | | | | Evaluations | | | | | | | |
|---|---|---|---|---|---|---|---|---|---|---|---|---|---|
| | Type of antiglare layer-provided substrate | Composition for forming antifouling layer | | | Fluorine content surplus | Surface shape of antifouling layer | | | | Haze [%] | G60before [%] | Removability of cream |
| | | Type | Type of PFPE | Amount [g] | | Ra [μm] | RSm [μm] | Judgement by formula I | Rsk | | | |
| 1 | 1 | X-71-195 | PFPEa | 0.30 | 98 | 0.083 | 13.6 | ○ | 1.03 | 7 | 74 | ◎ |
| 2 | 1 | X-71-195 | PFPEa | 0.17 | 13 | | | | | | | ○ |
| 3 | 1 | X-71-195 | PFPEa | 0.37 | 147 | | | | | | | ○ |
| 4 | 1 | X-71-195 | PFPEa | 0.15 | 3 | | | | | | | Δ |
| 5 | 1 | KY-178 | PFPEa | 0.20 | 29 | | | | | | | ◎ |
| 6 | 1 | UD509 | PFPEa | 0.30 | 94 | | | | | | | ◎ |
| 7 | 1 | Cmposition Cf | PFPEc | 0.27 | 68 | | | | | | | × |
| 8 | 1 | DSX | PFPEb | 0.23 | 61 | | | | | | | × |
| 9 | 2 | X-71-195 | PFPEa | 0.22 | 86 | 0.076 | 11.8 | × | 1.38 | 9 | 78 | × |

From Table 1, it is evident that Ex. 1 to 6 being Examples of the present invention, are excellent in antiglare and antifouling properties, especially in the removability of a creamy product such as hand cream.

REFERENCE SYMBOLS

10A, 10B: Antifouling layer-provided transparent substrate, 1: transparent substrate, 2: antifouling layer, 3: antiglare layer.

## Claims

1. An antifouling layer-provided transparent substrate, comprising

 a transparent substrate,
 an antifouling layer provided as the top surface layer on one main surface of the transparent substrate, and
 an antiglare layer disposed between the transparent substrate and the antifouling layer, wherein
 the antifouling layer has a divalent group represented by $-(OCF_2)_v(OCF_2CF_2)_w-$, where v and w are each independently an integer of at least 1, and
 the surface of the antifouling layer is such that the mean width RSm of the elements and the arithmetical mean roughness Ra satisfy the following formula (I):

$$RSm \geqq Ra \times 100 + 5 \qquad (I).$$

2. The antifouling layer-provided transparent substrate according to Claim 1, wherein the surface of the antifouling layer has a skewness Rsk of from -1.3 to 1.3.

3. The antifouling layer-provided transparent substrate according to Claim 1 or 2, wherein the fluorine content surplus of the antifouling layer calculated by the following method is from 10 to 150:
 the fluorine content surplus is calculated by the following formula (II) from the fluorine atom intensity F1 in the antifouling layer of the antifouling layer-provided transparent substrate, measured by using an X-ray fluorescence analyzer (manufactured by Rigaku Corporation, ZSX100e) under the conditions of measurement diameter: 30 mm, measurement ray: F-K$\alpha$, filter: OUT, slit: standard, spectral crystal: RX35 (manufactured by Rigaku Corporation), detector: PC, PHA: 100-300, peak angle: 38.794 deg. (20 sec), and B.G. angle: 43.000 deg. (10 sec), and the fluorine atom intensity F2 in the antifouling layer of the antifouling layer-provided transparent substrate, after wiping the surface of the antifouling layer of the antifouling layer-provided transparent substrate, with a Kimwipe moistened with ASAHIKLIN (registered trademark) AE-3000 (manufactured by AGC Inc.):

$$\text{Fluorine content surplus} = (F1-F2)/F2 \times 100 \qquad (II).$$

4. The antifouling layer-provided transparent substrate according to any one of Claims 1 to 3, wherein the ratio of said w to said v is from 0.1 to 10.

5. The antifouling layer-provided transparent substrate according to any one of Claims 1 to 4, wherein the arithmetical mean roughness Ra is from 0.01 to 0.15 $\mu$m.

6. The antifouling layer-provided transparent substrate according to any one of Claims 1 to 5, wherein the haze of the antifouling layer-provided transparent substrate is from 0.1 to 15.0%.

7. The antifouling layer-provided transparent substrate according to any one of Claims 1 to 6, wherein the 60° specular gloss measured on the surface of the antifouling layer is at most 140%.

8. The antifouling layer-provided transparent substrate according to any one of Claims 1 to 7, wherein the antiglare index value on the surface of the antifouling layer is at least 0.1.

9. The antifouling layer-provided transparent substrate according to any one of Claims 1 to 8, wherein the transparent substrate is a glass substrate.

10. The antifouling layer-provided transparent substrate according to any one of Claims 1 to 9, wherein the antifouling layer is a layer formed by using a compound having a divalent group represented by $-(OCF_2)_v(OCF_2CF_2)_w-$, where v and w are each independently an integer of at least 1, and a reactive silyl group.

11. The antifouling layer-provided transparent substrate according to any one of Claims 1 to 10, which is for vehicles.

12. The antifouling layer-provided transparent substrate according to Claim 11, which is for instrument panels.

## Patentansprüche

1. Transparentes Substrat, das mit einer Antifoulingschicht versehen ist, umfassend

   ein transparentes Substrat,
   eine Antifoulingschicht, die als die obere Oberflächenschicht auf einer Hauptoberfläche des transparenten Substrats bereitgestellt ist, und
   eine Blendschutzschicht, die zwischen dem transparenten Substrat und der Antifoulingschicht angeordnet ist, wobei
   die Antifoulingschicht eine zweiwertige Gruppe aufweist, dargestellt durch $-(OCF_2)_v(OCF_2CF_2)_w-$, wobei v und w jeweils unabhängig voneinander eine ganze Zahl von mindestens 1 sind, und
   die Oberfläche der Antifoulingschicht so beschaffen ist, dass die mittlere Breite RSm der Elemente und der arithmetische Mittenrauwert Ra die folgende Formel (I) erfüllen:

$$RSm \geq Ra \times 100 + 5 \quad (I).$$

2. Transparentes Substrat, das mit einer Antifoulingschicht versehen ist, nach Anspruch 1, wobei die Oberfläche der Antifoulingschicht eine Schiefe Rsk von -1,3 bis 1,3 aufweist.

3. Transparentes Substrat, das mit einer Antifoulingschicht versehen ist, nach Anspruch 1 oder 2, wobei der nach dem folgenden Verfahren berechnete Fluorgehaltsüberschuss der Antifoulingschicht 10 bis 150 beträgt:
   der Fluorgehaltüberschuss wird berechnet durch die folgenden Formel (II) aus der Fluoratomintensität F1 in der Antifoulingschicht des transparenten Substrats, das mit einer Antifoulingschicht versehen ist, gemessen unter Verwendung eines Röntgenfluoreszenzanalysegeräts (hergestellt von Rigaku Corporation, ZSX100e) unter den Bedingungen Messdurchmesser: 30 mm, Messstrahl: F-K$\alpha$, Filter: OUT, Spalt: Standard, Spektralkristall: RX35 (hergestellt von Rigaku Corporation), Detektor: PC, PHA: 100-300, Peakwinkel: 38,794 Grad (20 Sek.) und B.G. Winkel: 43,000 Grad (10 Sek.), und der Fluoratomintensität F2 in der Antifoulingschicht des transparenten Substrats, das mit einer Antifoulingschicht versehen ist, nach Wischen der Oberfläche der Antifoulingschicht des transparenten Substrats, das mit einer Antifoulingschicht versehen ist, mit einem mit ASAHIKLIN (eingetragenes Warenzeichen) AE-3000 (hergestellt von AGC Inc.) befeuchteten Kimwipe:

$$\text{Fluorgehaltüberschuss} = (F1-F2)/F2 \times 100 \quad (II).$$

4. Transparentes Substrat, das mit einer Antifoulingschicht versehen ist, nach einem der Ansprüche 1 bis 3, wobei das Verhältnis von w zu v von 0,1 bis 10 beträgt.

5. Transparentes Substrat, das mit einer Antifoulingschicht versehen ist, nach einem der Ansprüche 1 bis 4, wobei der arithmetische Mittenrauwert Ra von 0,01 bis 0,15 $\mu$m beträgt.

6. Transparentes Substrat, das mit einer Antifoulingschicht versehen ist, nach einem der Ansprüche 1 bis 5, wobei die Trübung des transparenten Substrats, das mit einer Antifoulingschicht versehen ist, 0,1 bis 15,0% beträgt.

7. Transparentes Substrat, das mit einer Antifoulingschicht versehen ist, nach einem der Ansprüche 1 bis 6, wobei der auf der Oberfläche der Antifoulingschicht gemessene 60°-Spiegelglanz höchstens 140% beträgt.

8. Transparentes Substrat, das mit einer Antifoulingschicht versehen ist, nach einem der Ansprüche 1 bis 7, wobei der Blendschutzindexwert auf der Oberfläche der Antifoulingschicht mindestens 0,1 beträgt.

9. Transparentes Substrat, das mit einer Antifoulingschicht versehen ist, nach einem der Ansprüche 1 bis 8, wobei das transparente Substrat ein Glassubstrat ist.

10. Transparentes Substrat, das mit einer Antifoulingschicht versehen ist, nach einem der Ansprüche 1 bis 9, wobei die Antifoulingschicht eine Schicht ist, die unter Verwendung einer Verbindung mit einer zweiwertigen Gruppe, dargestellt durch $-(OCF_2)_v(OCF_2CF_2)_w-$, wobei v und w jeweils unabhängig voneinander eine ganze Zahl von mindestens 1 sind, und einer reaktiven Silylgruppe gebildet ist.

11. Transparentes Substrat, das mit einer Antifoulingschicht versehen ist, nach einem der Ansprüche 1 bis 10, das für Fahrzeuge ist.

12. Transparentes Substrat, das mit einer Antifoulingschicht versehen ist, nach Anspruch 11, das für Instrumententafeln ist.

## Revendications

1. Substrat transparent pourvu d'une couche antisalissure, comprenant

un substrat transparent,
une couche antisalissure prévue en tant que couche de surface supérieure sur une surface principale du substrat transparent, et
une couche antireflet disposée entre le substrat transparent et la couche antisalissure, dans lequel
la couche antisalissure a un groupe divalent représenté par - $(OCF_2)_v(OCF_2CF_2)_w-$, où v et w sont chacun indépendamment un entier d'au moins 1, et
la surface de la couche antisalissure est telle que la largeur moyenne RSm des éléments et la rugosité moyenne arithmétique Ra satisfont la formule suivante (I) :

$$RSm \geq Ra x 100 + 5 \qquad (I).$$

2. Substrat transparent pourvu d'une couche antisalissure selon la revendication 1, dans lequel la surface de la couche antisalissure a une asymétrie Rsk allant de - 1,3 à 1,3.

3. Substrat transparent pourvu d'une couche antisalissure selon la revendication 1 ou 2, dans lequel le surplus de teneur en fluor de la couche antisalissure calculé par le procédé suivant va de 10 à 150 :
le surplus de teneur en fluor est calculé par la formule suivante (II) à partir de l'intensité d'atome de fluor F1 dans la couche antisalissure du substrat transparent pourvu d'une couche antisalissure, mesurée en utilisant un analyseur de fluorescence aux rayons X (fabriqué par Rigaku Corporation, ZSX100e) dans les conditions de diamètre de mesure : 30 mm, rayon de mesure : F-K$\alpha$, filtre : OUT, fente : standard, cristal spectral : RX35 (fabriqué par Rigaku Corporation), détecteur : PC, PHA : 100 à 300, angle de pic : 38,794 degrés (20 s), et angle B.G. : 43 000 degrés (10 s), et l'intensité d'atome de fluor F2 dans la couche antisalissure du substrat transparent pourvu d'une couche antisalissure, après essuyage de la surface de la couche antisalissure du substrat transparent pourvu d'une couche antisalissure, avec une Kimwipe humidifiée avec ASAHIKLIN (marque déposée) AE-3000 (fabriqué par AGC Inc.) :

$$\text{Surplus de teneur en fluor} = (F1-F2)/F2x100 \qquad (II).$$

4. Substrat transparent pourvu d'une couche antisalissure selon l'une quelconque des revendications 1 à 3, dans lequel le rapport dudit w sur ledit v va de 0,1 à 10.

5. Substrat transparent pourvu d'une couche antisalissure selon l'une quelconque des revendications 1 à 4, dans lequel la rugosité moyenne arithmétique Ra va de 0,01 à 0,15 $\mu$m.

6. Substrat transparent pourvu d'une couche antisalissure selon l'une quelconque des revendications 1 à 5, dans lequel la turbidité du substrat transparent pourvu d'une couche antisalissure va de 0,1 à 15,0 %.

7. Substrat transparent pourvu d'une couche antisalissure selon l'une quelconque des revendications 1 à 6, dans

lequel le brillant spéculaire à 60° mesuré sur la surface de la couche antisalissure est d'au plus 140 %.

**8.** Substrat transparent pourvu d'une couche antisalissure selon l'une quelconque des revendications 1 à 7, dans lequel la valeur d'indice antireflet sur la surface de la couche antisalissure est d'au moins 0,1.

**9.** Substrat transparent pourvu d'une couche antisalissure selon l'une quelconque des revendications 1 à 8, dans lequel le substrat transparent est un substrat en verre.

**10.** Substrat transparent pourvu d'une couche antisalissure selon l'une quelconque des revendications 1 à 9, dans lequel la couche antisalissure est une couche formée en utilisant un composé ayant un groupe divalent représenté par $-(OCF_2)_v(OCF_2CF_2)_w-$, où v et w sont chacun indépendamment un entier d'au moins 1, et un groupe silyle réactif.

**11.** Substrat transparent pourvu d'une couche antisalissure selon l'une quelconque des revendications 1 à 10, qui est destiné à des véhicules.

**12.** Substrat transparent pourvu d'une couche antisalissure selon la revendication 11, qui est destiné à des tableaux de bord.

Fig. 1

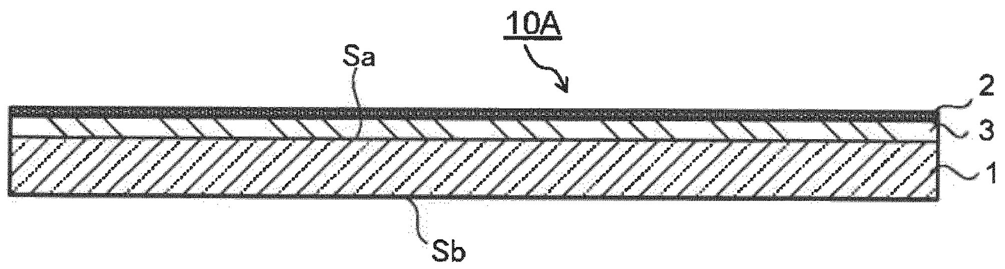


Fig. 2

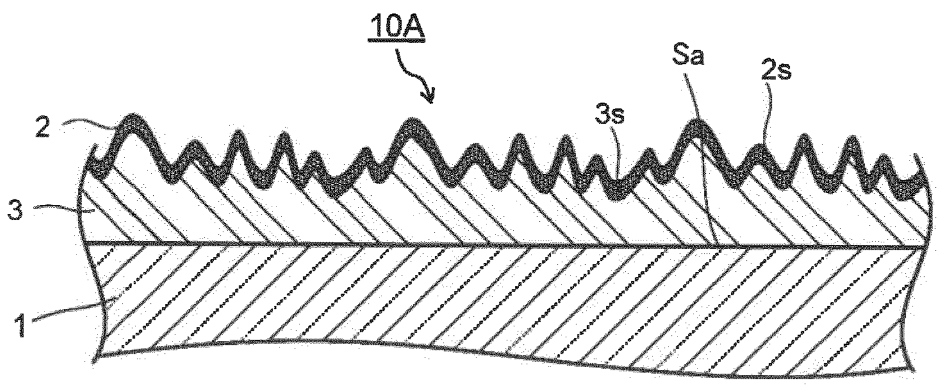


Fig. 3

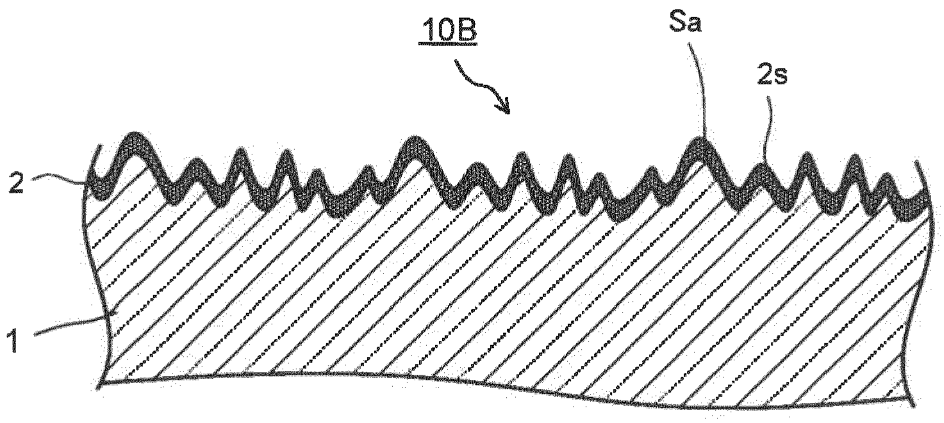

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016159496 A
- WO 2014119453 A1
- US 2017197875 A1
- WO 2011060047 A
- US 2015118502 A1
- WO 2018034138 A
- JP 4138936 B
- US 20100129672
- WO 2011059430 A
- WO 2012064649 A
- JP 2012072272 A
- WO 2013042732 A
- WO 2013121984 A
- WO 2013121985 A
- WO 2013121986 A
- WO 2014126064 A
- WO 2014163004 A
- JP 2014080473 A
- JP 2014218639 A
- WO 2015087902 A
- JP 2015199906 A
- JP 2016204656 A
- JP 2016210854 A
- JP 2016222859 A
- WO 2017038830 A
- WO 2017038832 A
- WO 2017187775 A
- WO 2018143433 A